# FASCICULE DE BREVET EUROPEEN

(11) **EP 1 138 103 B1**
(45) Date de publication et mention de la délivrance du brevet: **03.08.2005**
(21) Numéro de dépôt: 99973359.5
(22) Date de dépôt: 26.11.1999
(51) Int. Cl.: H02G 7/20, H02J 3/00

(54) **APPAREIL ET METHODE DE COMMUTATION POUR UN TRONçON D'UNE LIGNE DE TRANSPORT D'ENERGIE ELECTRIQUE**
VERFAHREN UND VORRICHTUNG ZUR KOMMUTATION IN EINER ABSCHNITT EINER ELEKTRISCHEN VERSORGUNGSLEITUNG
SWITCHING APPARATUS AND METHOD FOR AN ELECTRIC POWER TRANSMISSION LINE SECTION

(30) Priorité: 04.12.1998 CA 2253762
(43) Date de publication de la demande: 04.10.2001
(73) Titulaire: HYDRO-QUEBEC, Montréal Québec H2Z 1A4 (CA)
(72) Inventeur: COUTURE, Pierre, Boucherville, Québec J4B 4A4 (CA)
(74) Mandataire: Thébault, Jean-Louis
(86) Numéro de dépôt international: PCT/CA1999/001136
(87) Numéro de publication internationale: WO 2000/035061

(56) Documents cités:
- GB-A- 2 058 483
- GB-A- 2 324 417
- DATABASE WPI Section EI, Week 198346 Derwent Publications Ltd., London, GB; Class X12, AN 1983-820070 XP002131621 & SU 993 370 A (KIRG POWER RES INST), 30 janvier 1983 (1983-01-30)

## Description

La présente invention vise un appareil et une méthode de commutation pour un tronçon d'une ligne de transport d'énergie électrique comportant plusieurs lignes de phase. Dans le présent texte nous appellerons "ligne de phase" ce qui est communément appelé par l'homme de l'art "phase". L'appareil et la méthode peuvent servir entre autres mais non exclusivement à dégivrer une ligne de transport d'énergie électrique, ou bien même modifier l'écoulement de puissance à travers une ligne de transport d'énergie électrique de façon statique ou dynamique.

Connu dans l'art antérieur, il existe le brevet américain no 2,797,344 délivré le 25 juin 1957, et nommant comme inventeur monsieur W. T. Peirce. Ce brevet décrit un appareil pour déglacer des câbles électriques. Ce brevet propose que dans une ligne de transmission de puissance électrique, un câble soit réalisé par une paire de conducteurs isolés les uns des autres. Un pont électrique est prévu en série avec un desdits conducteurs. Un moyen est prévu pour ouvrir le pont électrique, et un autre moyen est prévu pour commander l'opération du pont électrique en réponse à une accumulation de glace sur le câble. Le pont électrique comprend un interrupteur normalement fermé qui est ouvert par le moyen qui répond à une accumulation de glace sur le câble.

Connu dans l'art antérieur, il existe également le brevet américain no 4,082,962 délivré le 4 avril 1978, et nommant comme inventeurs Vladimir Vladimirovich BURGSDORF et coll. Ce brevet décrit un dispositif pour faire fondre la glace en utilisant un courant continu dans les conducteurs d'une ligne de transmission de puissance suspendue. Ce brevet propose d'utiliser un redresseur que l'on branche momentanément à l'extrémité d'un des conducteurs de la ligne. L'appareil comprend également un circuit de mise à la terre ainsi qu'un circuit de filtrage branchés en parallèle au redresseur. Le circuit proposé dans ce brevet utilise un courant redressé pour déglacer la ligne. Pour chaque section de ligne, un redresseur, un circuit de mise à la terre ainsi qu'un circuit de filtrage sont utilisés.

Connu dans l'art antérieur, il existe également le brevet américain no 4,126,792 délivré le 21 novembre 1978, et nommant comme inventeurs Georgy A. GENRIKH et coll. Ce brevet propose un réseau à haut voltage pour des régions où le givre est présent en grande quantité. Ce brevet propose l'utilisation d'un redresseur et d'un circuit de commutation qui permet de brancher au moins un conducteur de la ligne au redresseur afin de faire fondre le givre par un courant redressé.

Connu dans l'art, il existe également le brevet américain no 4,119,866 délivré le 10 octobre 1978, et nommant comme inventeurs Georgy Andreevich GENRIKH et coll. Ce brevet propose l'utilisation d'une source de courant continu et de différents commutateurs branchés sur une section de ligne pour permettre de déglacer un conducteur de la ligne par courant continu.

Connu dans l'art antérieur, il existe également le brevet américain no 4,190,137 délivré le 26 février 1980, et nommant comme inventeurs Akira SHIMADA et coll. Ce brevet décrit un appareil pour déglacer des câblés de tramway. Ce brevet propose de former des boucles avec différentes sections des câbles d'alimentation du tramway et d'utiliser un certain type de transformateurs pour faire passer dans les boucles en question un courant que l'on superpose au courant d'alimentation pour ainsi déglacer les câbles d'alimentation.

Également connu dans l'art antérieur, il existe les brevets américains suivants qui décrivent différents appareils et méthodes de commutation de lignes pour différentes applications: 2,240,772; 2,852,075; 4,028,614; 4,085,338; 4,135,221; 4,322,632; 4,489,270; 4,492,880; 4,769,587; 5,124,882; 5,483,030; 5,734,256; 5,777,837; et 5,754,045.

Un des inconvénients que l'on retrouve dans tous les appareils et méthodes de commutation mentionnés ci-dessus, réside dans le fait qu'aucun de ces appareils ou méthodes ne permet de commuter des conducteurs d'un tronçon d'une ligne de transport d'énergie électrique de façon efficace et sécuritaire.

Un des objectifs de la présente invention est de proposer un appareil et une méthode de commutation pour un tronçon d'une ligne de transport d'énergie électrique qui permet de commuter des conducteurs d'un tronçon de ligne sans débrancher ledit tronçon de la ligne, d'une façon efficace et sécuritaire.

Les objets, avantages et autres caractéristiques de la présente invention deviendront plus apparents à la lecture de la description suivante qui ne se veut pas restrictive, des différents modes de réalisation préférés donnés à titre d'exemple seulement avec référence aux dessins ci-joints.

### Résumé de l'invention:

La présente invention vise un appareil de commutation pour un tronçon d'une ligne de transport d'énergie électrique comportant plusieurs lignes de phase, chacune des lignes de phase comportant plusieurs conducteurs isolés électriquement les uns des autres et branchés en parallèle pour conduire un courant de phase, les conducteurs de chaque ligne de phase étant court-circuités entre eux à deux extrémités du tronçon, l'appareil étant caractérisé en ce qu'il comprend
des paires d'interrupteurs électromécanique et électronique branchés en parallèle, pour ouvrir et fermer de façon sélective les conducteurs de chaque ligne de phase de façon à conduire le courant de phase correspondant à travers un ou plusieurs conducteurs;
des moyens de détection pour détecter des conditions d'opération courantes du tronçon de la ligne de transport d'énergie électrique; et
des moyens de commande pour commander les paires d'interrupteurs électromécanique et électronique en fonction des conditions d'opération courantes du tronçon, les interrupteurs de chaque paire étant commandés de façon indépendante par des signaux de commande.

De préférence, les moyens de détection comprennent plusieurs cellules de charge, au moins une cellule de charge étant montée par ligne de phase, chaque cellule de charge comprenant un senseur de charge pour mesurer une valeur de charge supportée par la ligne de phase correspondante, un senseur d'inclinaison pour mesurer son inclinaison par rapport à un axe vertical, un senseur de température pour mesurer une température ambiante, et un émetteur radiofréquence pour émettre des signaux indicatifs de la valeur de charge, de l'inclinaison et de la température ambiante. Les moyens de détection incluent aussi une unité de contrôle comportant un processeur ayant des premiers ports d'entrée pour recevoir des signaux indicatifs des positions d'opération des interrupteurs, et des seconds ports d'entrée pour recevoir des signaux indicatifs des tensions aux bornes des paires d'interrupteurs; un émetteur radiofréquence branché au processeur pour émettre des signaux indicatifs des positions d'opération des interrupteurs, et des tensions; et des moyens d'alimentation électrique pour alimenter le processeur et l'émetteur.

De préférence, les moyens de commande comprennent le processeur qui comporte en outre des sorties pour émettre les signaux de commande; un récepteur radiofréquence branché au processeur pour recevoir des signaux radiofréquences de commande à partir desquels les signaux de commande sont produits; un amplificateur branché au processeur pour commander- les moyens moteurs en fonction des signaux de commande; et les moyens d'alimentation électrique pour alimenter en outre le récepteur et l'amplificateur.

La présente invention vise également une méthode de commutation pour un tronçon d'une ligne de transport d'énergie électrique comportant plusieurs lignes de phase, chacune des lignes de phase comportant plusieurs conducteurs isolés électriquement les uns des autres et branchés en parallèle pour conduire un courant de phase, les conducteurs de chaque ligne de phase étant court-circuités entre eux à deux extrémités du tronçon, la méthode étant caractérisé en ce qu'elle comprend les étapes suivantes:
(a) détecter des conditions d'opération courantes du tronçon de la ligne de transport d'énergie électrique; et
(b) commander des paires d'interrupteurs électromécanique et électronique branchés en parallèle en fonction des conditions d'opération détectées à l'étape (a) pour ouvrir et fermer de façon sélective les conducteurs de chaque ligne de phase de façon à conduire le courant de phase correspondant à travers un ou plusieurs conducteurs, les interrupteurs de chaque paire étant commandés de façon indépendante par des signaux de commande.

### Brève description des dessins:

La figure 1 est un diagramme de circuit schématique montrant un tronçon de ligne triphasée muni d'interrupteurs selon un premier mode de réalisation de la présente invention.
La figure la est un diagramme de circuit schématique montrant un mode de réalisation préférentiel pour réaliser chaque interrupteur montré à la figure 1, selon la présente invention.
La figure 2 est un diagramme de circuit schématique montrant un tronçon de ligne triphasée muni d'interrupteurs selon un deuxième mode de réalisation de la présente invention.
La figure 3 est un diagramme de circuit schématique montrant un tronçon de ligne-triphasée muni d'interrupteurs selon un troisième mode de réalisation de la présente invention.
La figure 4 est un diagramme de circuit schématique montrant un tronçon de ligne triphasée muni d'interrupteurs selon un quatrième mode de réalisation de la présente invention.
La figure 5 est un diagramme de circuit schématique montrant un tronçon de ligne triphasée muni d'interrupteurs selon un cinquième mode de réalisation de la présente invention.
La figure 6 est un diagramme schématique montrant un mode de réalisation préféré d'interrupteurs électromécaniques selon la présente invention.
La figure 7 est un diagramme logique de différentes positions d'opération possibles d'un dispositif de commutation électromécanique regroupant quatre interrupteurs électromécaniques selon la présente invention.
La figure 8 est une représentation schématique d'un mode de réalisation préféré d'un dispositif de commutation électromécanique regroupant quatre interrupteurs électromécaniques capables de réaliser le diagramme logique de la figure 7 selon la présente invention.
La figure 9 est une vue de côté partielle d'un mode de réalisation préféré d'un dispositif de commutation électromécanique selon la présente invention.
La figure 10 est une vue en coupe du dispositif montré à la figure 8, montrant seulement certains éléments de la vue en coupe.
La figure 11 est une vue complète de côté du dispositif de commutation montré à la figure 9 dans une première position d'opération.
La figure 12 est une vue complète de côté du dispositif de commutation montré à la figure 9 dans une seconde position d'opération.
La figure 13 est une vue de côté schématique montrant un détail de construction du mode de réalisation montré aux figures 11 et 12.
La figure 14 est une vue de côté schématique d'un détail de construction du mode de réalisation montré aux figures 11, 12 et 13.
La figure 15 est une vue de côté d'un autre dispositif de commutation électromécanique selon un mode de réalisation préféré de la présente invention.
La figure 16 est un diagramme bloc d'une unité qui comprend un dispositif de commande et une partie du dispositif de détection selon la présente invention.
La figure 17 est une vue de face d'un pylône supportant une ligne de transport d'énergie électrique sur lequel des modules selon la présente invention sont montés.
La figure 18 est une vue de côté du pylône montré à la figure 17.
La figure 19 est une vue de côté d'un pylône, montrant un mode de réalisation alternatif à celui montré à la figure 18.
La figure 20 est un diagramme bloc d'une cellule charge qui réalise l'autre partie du dispositif de détection selon la présente invention.
La figure 21 est une vue en perspective d'un des modules montré à la figure 17 selon la présente invention.
La figure 22 est une vue de face d'une entretoise connue dans l'art antérieur.
La figure 23 est une vue de face d'une entretoise modifiée pour une application selon la présente invention.
La figure 24 est une vue de face d'une autre entretoise modifiée pour une application selon la présente invention.
La figure 25 est une vue de face d'un palonnier connu dans l'art antérieur.
La figure 26 est une vue de face d'un palonnier modifié pour l'application selon la présente invention.
La figure 27 est une diagramme de circuit schématique d'un mode de réalisation préféré d'une paire d'interrupteurs électromécanique et électronique selon la présente invention.
La figure 28 est une représentation conceptuelle de côté d'un éclateur thermique montré à la figure 26 dans une première position. Par éclateur thermique nous entendons un dispositif qui, dans un premier temps, produit un arc lorsque survient une surtension aux bornes d'un espace, et, dans un deuxième temps, produit un court-circuit de l'espace lorsque le courant produit par l'arc dépasse un certain seuil.
La figure 29 est une représentation conceptuelle de côté de l'éclateur thermique montré à la figure 26 dans une seconde position.
La figure 30 est une représentation conceptuelle en perspective d'un autre éclateur thermique selon la présente invention.
La figure 31 est une vue de face d'un pylône supportant une ligne de transport d'énergie.

### Description détaillée des dessins:

Dans la description qui suit, les mêmes repères numériques désignent des éléments semblables. Selon une première application de la présente invention, nous expliquerons comment elle peut être utilisée pour dégivrer un tronçon d'une ligne de transport d'énergie électrique par effet Joule.

On peut en principe dégivrer une ligne de transport d'électricité par effet Joule en une période de temps inférieure à celle où l'accumulation de la glace atteint une valeur critique, c'est-à-dire son point de rupture mécanique en utilisant la chaleur produite par un courant inférieur au courant de conception de la ligne qui est aussi appelé le courant nominal de la ligne.

Pour une ligne de transport d'énergie électrique à haute tension, on utilise en général pour chaque ligne de phase plusieurs conducteurs pour réduire les pertes par effet couronne. Cependant, pour une ligne de phase à conducteurs multiples, le courant nominal de la ligne de transport d'énergie électrique est généralement trop faible pour permettre de la dégivrer par effet Joule selon la formule R*I². Pour permettre un dégivrage par effet Joule, on propose l'utilisation d'un appareil qui comporte des paires d'interrupteurs électromécanique et électronique, branchés en série avec les conducteurs de chaque ligne de phase pour concentrer le courant d'une ligne de phase dans un ou dans quelques uns de ses conducteurs. Par exemple, pour une ligne de transport d'énergie électrique de 735 kV avec un courant nominal de 2000 A à quatre conducteurs par ligne de phase, la concentration du courant dans un seul conducteur accroît par 16 la production de chaleur selon la formule R*I². Un tel appareil peut aussi être utilisé pour supprimer le galop sur la ligne de transport d'énergie électrique par suppression du verglas.

Ainsi, prenons pour exemple une ligne de transport d'énergie électrique de x phases où chaque ligne de phase à n conducteurs. Selon la présente invention, l'appareil comprend n paires d'interrupteurs électromécanique et électronique par ligne de phase pour permettre de concentrer le courant d'une phase dans un ou quelques uns de ses conducteurs. Les conducteurs sont bien sûr isolés les uns par rapport aux autres. À chaque bout du tronçon, les n conducteurs de chaque ligne de phase sont mis en court-circuit.

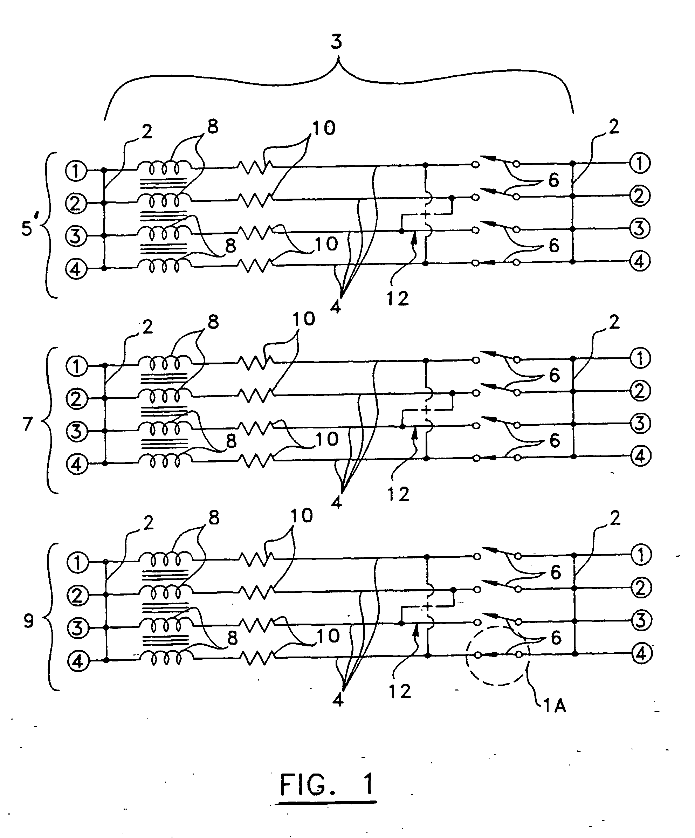

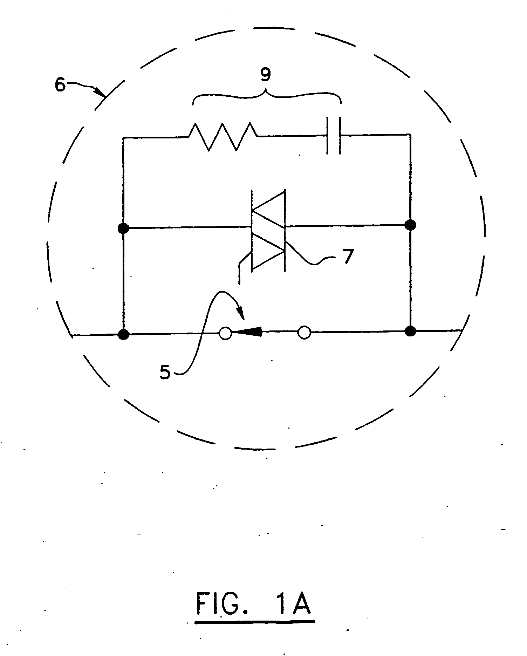

Si l'on se réfère maintenant à la figure 1, on peut voir une partie d'un appareil de commutation pour un tronçon 3 d'une ligne de transport d'énergie électrique selon la présente invention. La ligne de transport d'énergie électrique peut comporter plusieurs lignes de phase. Dans le cas présent, la ligne de transport d'énergie électrique comporte trois lignes de phase 5', 7 et 9. Chacune des lignes de phase 5", 7 et 9 comporte plusieurs conducteurs 4 isolés électriquement les uns des autres pour conduire le courant de phase. Les conducteurs de chaque ligne de phase sont court-circuités entre eux aux deux extrémités du tronçon 3 par des courts-circuits 2.

L'appareil selon la présente invention comprend des paires d'interrupteurs électromécanique et électronique 6 branchés en parallèle, pour ouvrir et fermer de façon sélective les conducteurs 4 de chaque ligne de phase 5, 7 ou 9 de façon à conduire le courant de phase correspondant à travers un ou plusieurs conducteurs. Un mode de réalisation préféré de chaque paire d'interrupteurs sera montré avec plus de détails sur la figure 1a.

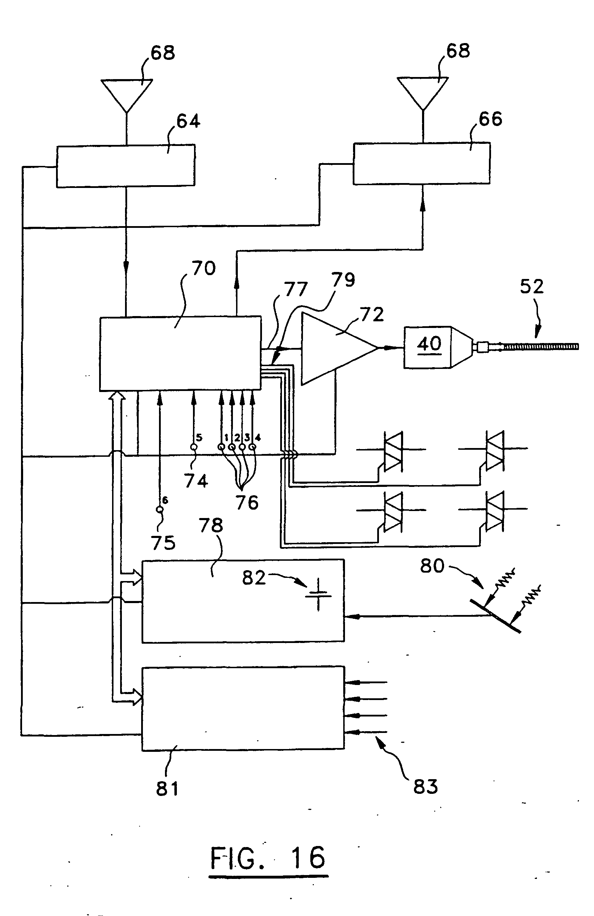

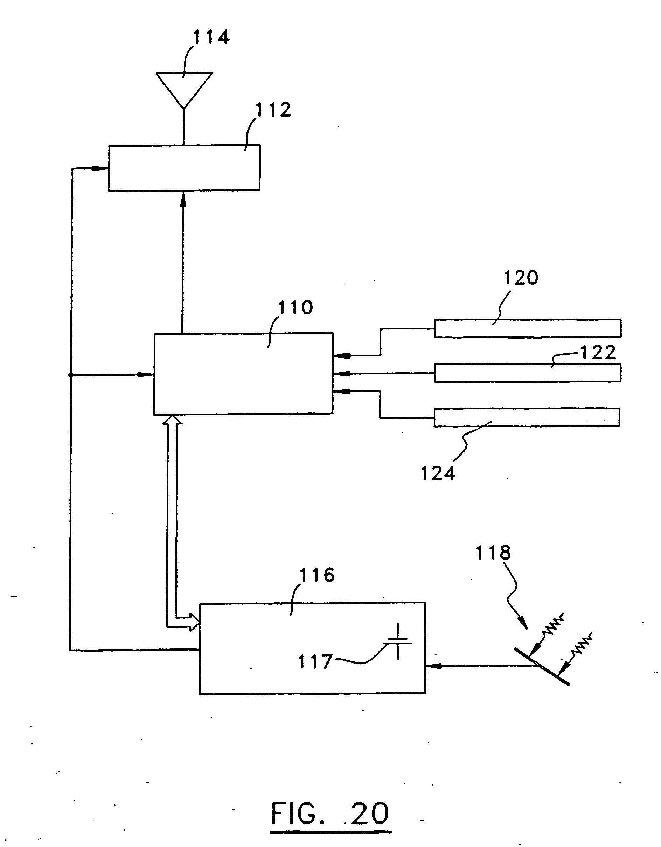

L'appareil comprend également un dispositif de détection pour détecter les conditions d'opération courantes du tronçon de la ligne de transport d'énergie électrique. Ce dispositif de détection est réalisé en partie par le circuit montré à la figure 16 et en partie par le circuit montré à la figure 20.

L'appareil comprend également un dispositif de commande pour commander les paires d'interrupteurs électromécanique et électronique en fonction des conditions d'opération. Les interrupteurs de chaque paire 6 sont commandés de façon indépendante par des signaux de commande. Un mode de réalisation préféré du dispositif de commande sera décrit et montré en relation avec la figure 16.

Chaque ligne de phase comporte quatre conducteurs 4 et est munie de quatre paires d'interrupteurs 6. De plus, sur chaque ligne de phase, un circuit équivalent des inductances et des inductances mutuelles de ligne 8, et des résistances de ligne 10 est indiqué. Pour les fins de discussion, on néglige les effets capacitifs de la ligne. Les paires d'interrupteurs 6 d'une ligne de phase à n conducteurs peuvent faire passer du courant dans 1, 2, ... ou n conducteurs dépendamment du courant disponible pour fins de dégivrage. Pour des raisons de sécurité, les paires d'interrupteurs électromécanique et électronique sont commandées de façon à conduire le courant de phase de chaque ligne de phase à travers au moins un des interrupteurs électromécaniques correspondants pour ne pas ouvrir la ligne. Ainsi, les interrupteurs électromécaniques des paires d'interrupteurs 6 n'ouvrent jamais tous simultanément les n conducteurs d'une ligne de phase.

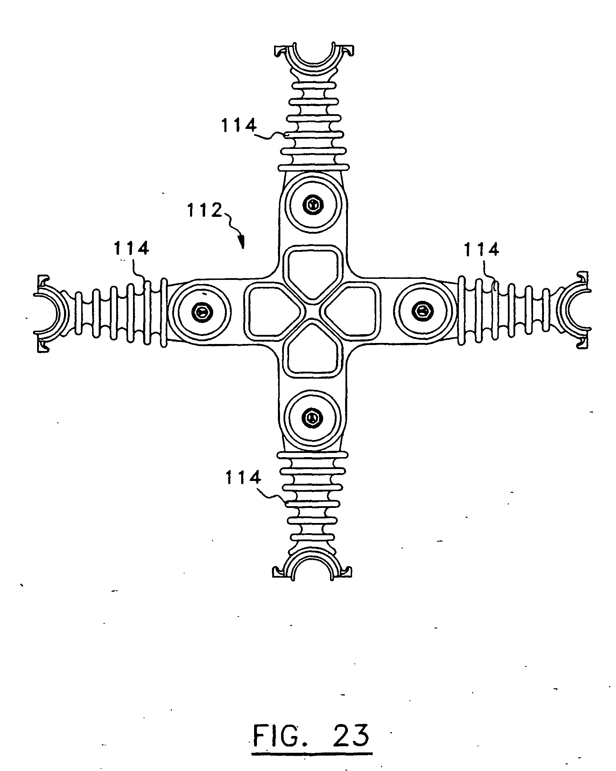

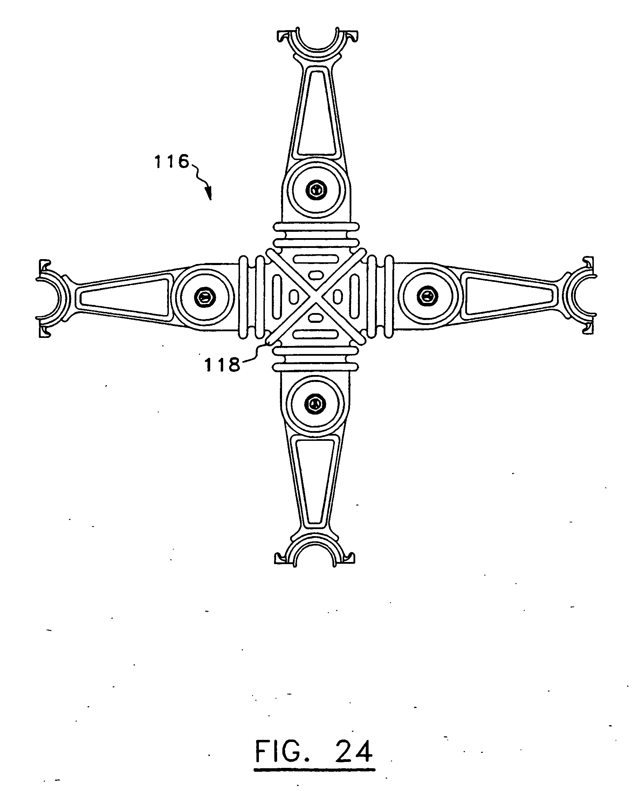

Des entretoises comme celles montrées aux figures 23 et 24 sont prévues pour tenir les conducteurs d'une même ligne de phase à une certaine distance les uns des autres entre lès pylônes. Ces entretoises doivent être capables d'isoler électriquement les conducteurs d'une même ligne de phase les uns des autres.

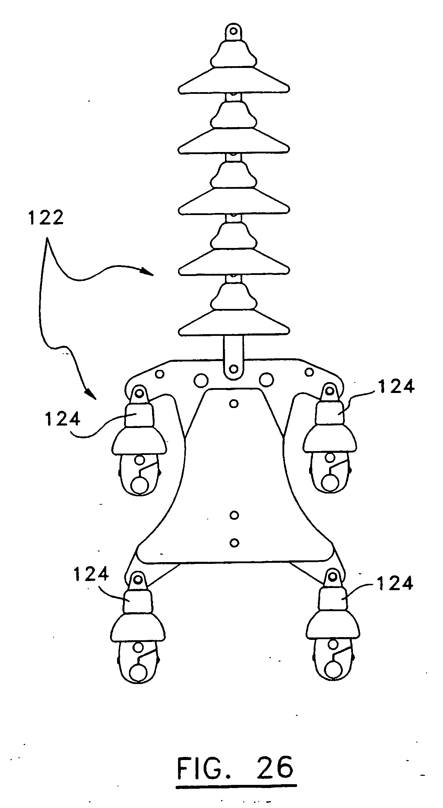

Des palonniers comme celui montré à la figure 26 sont montés sur les pylônes et relient mécaniquement les conducteurs aux isolateurs. Ces palonniers doivent isoler électriquement les conducteurs d'une même ligne de phase les uns des autres. Des éclateurs classiques 12 qui peuvent être des éclateurs à semi-conducteur tels que des diodes avalanches ou des varistors, comme ceux montrés à la figure 1 sont prévus pour protéger les isolateurs des palonniers et des entretoises lors d'une surcharge en courant de ligne qui peut induire une surtension entre les conducteurs de la ligne de phase.

Selon une deuxième application, la présente invention peut être utilisée pour gérer l'écoulement de puissance dans un tronçon d'une ligne de transport d'énergie électrique en changeant l'impédance série de la ligne avec les paires d'interrupteurs. Par exemple, pour changer l'écoulement de puissance sur une bouche de ligne de transmission à 735 kV alimentée par des lignes provenant des barrages éloignés, il suffit de modifier la position d'opération des paires d'interrupteurs de l'appareil de commutation pour modifier l'écoulement de puissance. À cet effet, on peut ouvrir de façon permanente des interrupteurs électromécaniques de paires d'interrupteurs prédéterminées associées à des lignes de phase prédéterminées, et utiliser les interrupteurs électroniques des paires d'interrupteurs prédéterminées pour ouvrir et fermer les conducteurs correspondants et ainsi commander en temps réel l'écoulement de puissance et stabiliser le réseau électrique avec une commande fine et active.

Un changement d'impédance sur différentes lignes va produire un écoulement de puissance différent. Il existe un très grand nombre de combinaisons possibles en fonction de l'état dans lequel on place les différentes paires d'interrupteurs. L'application décrite ci-dessus s'avère très utile pour effectuer une stabilisation active du réseau par commande dynamique de l'écoulement de puissance.

En se référant à la figure 1a, on peut voir que chaque paire d'interrupteurs comprend un interrupteur électronique 7 en parallèle avec un interrupteur mécanique 5 pour former une paire d'interrupteurs électromécanique et électronique 6. Selon un mode de réalisation, l'interrupteur électronique 7 est utilisé pour permettre les transitions de l'interrupteur mécanique correspondant et est asservi à ce dernier. Cependant, selon un autre mode de réalisation, on peut utiliser l'interrupteur électronique pour prendre la relève de l'interrupteur mécanique 5 si ce dernier, suite à un défaut, demeure en position ouverte pour certains conducteurs de la ligne de phase.

L'interrupteur électromécanique 5 est muni d'un amortisseur 9. Lorsque la paire d'interrupteurs 6 doit fermer, l'interrupteur électronique 7 ferme avant l'interrupteur mécanique, et lorsque le commutateur 6 doit ouvrir, l'interrupteur mécanique 5 ouvre avant l'interrupteur électronique 7. L'interrupteur électronique 7 peut être par exemple un thyristor, triac, GTO, MOSFET, IGBT, etc.

Pour réaliser une commande de l'écoulement de puissance, l'interrupteur électronique 7 doit pouvoir être commandé par une commande venant de l'extérieur à travers un récepteur de commande. La présence d'un récepteur de commande permet de changer en temps réel l'écoulement de puissance du réseau en changeant dynamiquement l'impédance des lignes, en commandant uniquement les interrupteurs électroniques 7 après avoir ouvert les interrupteurs mécaniques 5 sur certains conducteurs. Cette commande s'effectue à partir d'une unité centrale qui analyse l'écoulement de puissance et envoie les signaux appropriés aux différents récepteurs de commande pour fermer ou ouvrir, en régime dynamique, les différents interrupteurs électroniques.

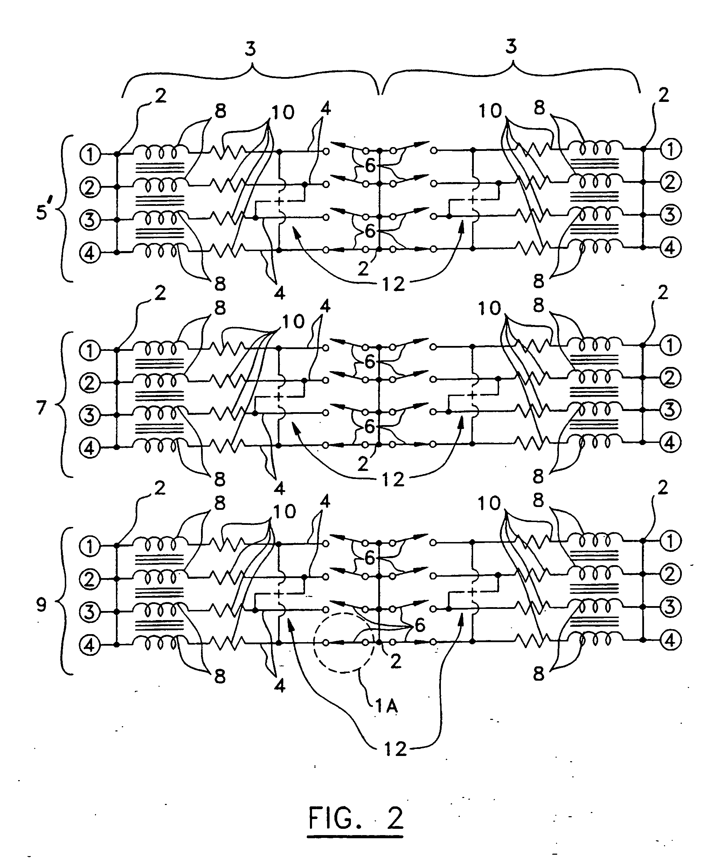

En se référant maintenant à la figure 2, on peut voir deux tronçons de ligne adjacents chacun muni de paires d'interrupteurs 6. Pour une longueur de tronçon donnée, les paires d'interrupteurs 6 doivent être capables de commuter une valeur de tension donnée. Plus le tronçon est long, plus la tension que les paires d'interrupteurs 6 doivent commuter et que les entretoises et les palonniers du tronçon de ligne doivent supporter est élevée. Par exemple, dans la figure 1, supposons que les paires d'interrupteurs 6 peuvent commuter 10,000 volts, cela détermine une longueur de tronçon maximale. Si l'on veut doubler la longueur du tronçon tout en utilisant des paires d'interrupteurs adaptés pour une tension de 10,000 volts, on peut utiliser la configuration montrée à la figure 2.

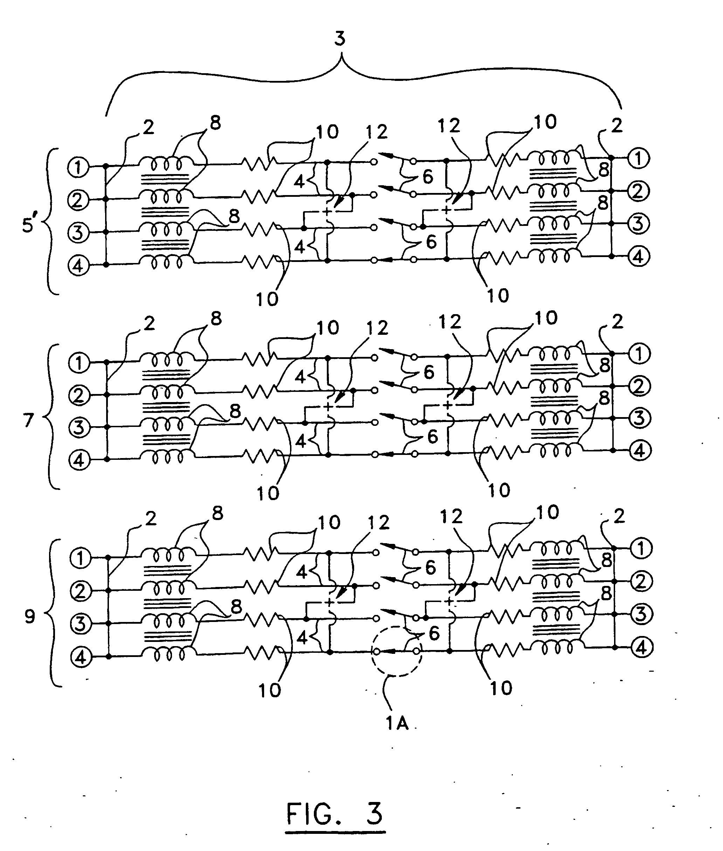

En se référant maintenant à la figure 3, on propose une configuration pour doubler la longueur du tronçon de ligne montré à la figure 1 en utilisant des paires de commutateurs 6 aptes à commuter une tension de 20,000 volts. Toutefois, pour limiter la tension que devront supporter les entretoises et les palonniers du tronçon de ligne à 10,000 volts, les paires de commutateurs seront disposés substantiellement au milieu du tronçon.

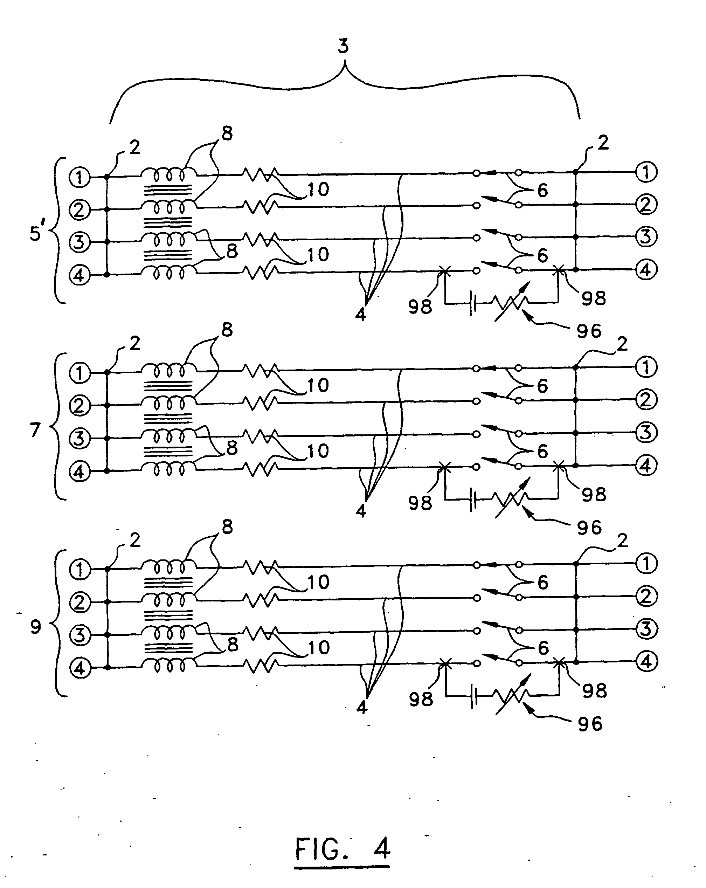

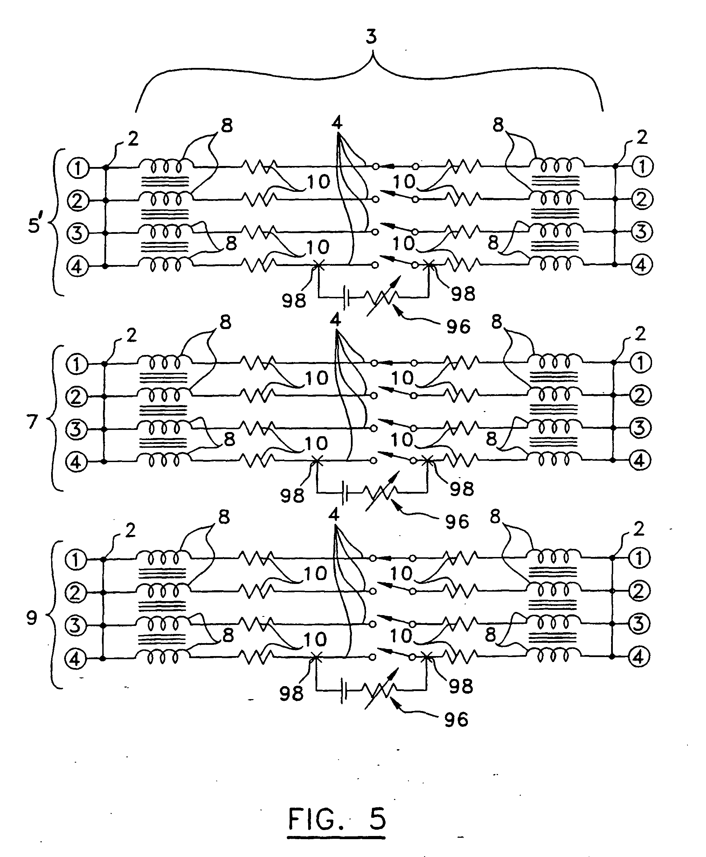

En se référant maintenant aux figures 4 et 5, on propose des configurations semblables à celles montrées aux figures 1 et 3 pour dégivrer une ligne de transport d'énergie lorsque celle-ci est hors tension. Il est important de noter que la présente invention peut très bien dégivrer une ligne de transport d'énergie lorsque celle-ci est sous tension. Cependant, dans le cas où l'on effectue un dégivrage lorsque la ligne est hors tension, on utilise alors une source de courant externe 96 par exemple une source de courant montée sur camion que l'on branche de part et d'autre des paires d'interrupteurs 6 par des pinces 98. En faisant passer du courant dans un ou quelques uns des conducteurs, on dégivre la ligne de transport.

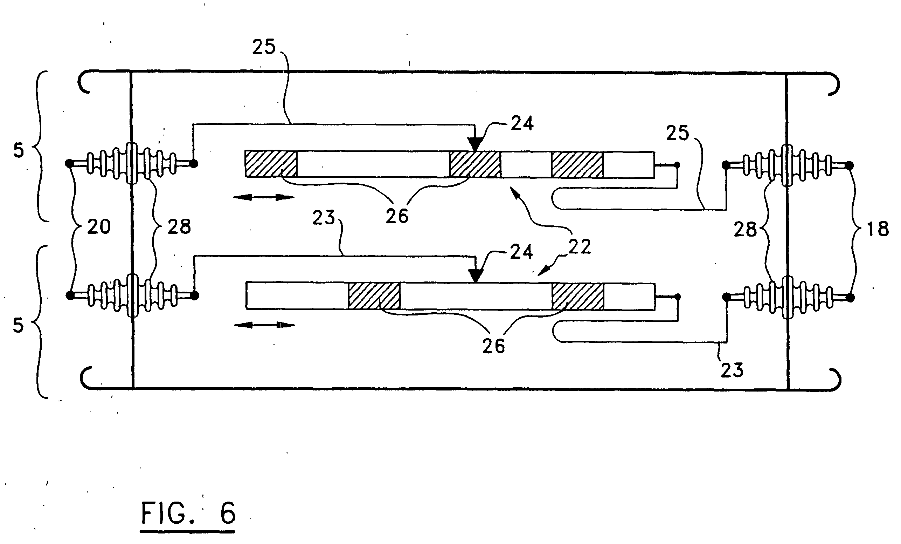

En se référant maintenant à la figure 6, on peut voir un dispositif de commutation électromécanique qui regroupe des interrupteurs électromécaniques 5. Chaque interrupteur électromécanique 5 est destiné à être branché en série avec un des conducteurs du tronçon de ligne. Des contacts conducteurs mobiles 22 sont branchés respectivement aux bornes 18. Des contacts conducteurs fixes 24 sont branchés respectivement aux bornes 20. Les contacts conducteurs fixes 24 sont respectivement associés aux contacts conducteurs mobiles 22. Chacun des contacts conducteurs mobiles ou chacun des contacts conducteurs fixes présente une surface conductrice de contact partiellement discontinue 26. Dans le cas présent, les contacts conducteurs mobiles 22 sont munis desdites surfaces de contact partiellement discontinues 26.

Un dispositif de guidage qui n'est pas montré sur cette figure 6 est prévu pour guider les contacts conducteurs mobiles 22 par rapport aux contacts conducteurs fixes correspondants 24 selon des parcours donnés. Les surfaces de contact partiellement discontinues 26 sont agencées de sorte que tout au long des parcours il y a toujours au moins une connexion entre un des contacts conducteurs mobiles et un des contacts conducteurs fixes. De plus, un moyen moteur qui n'est pas montré sur cette figure 6 est prévu pour déplacer les contacts conducteurs mobiles le long du parcours.

La partie de chaque contact conducteur mobile qui présente la surface de contact partiellement discontinue 26 est appelée tige de commutation. Les bornes 18 sont reliées aux contacts mobiles par des isolateurs de traverse 28 qui isolent le conducteur 25 du conducteur 23.

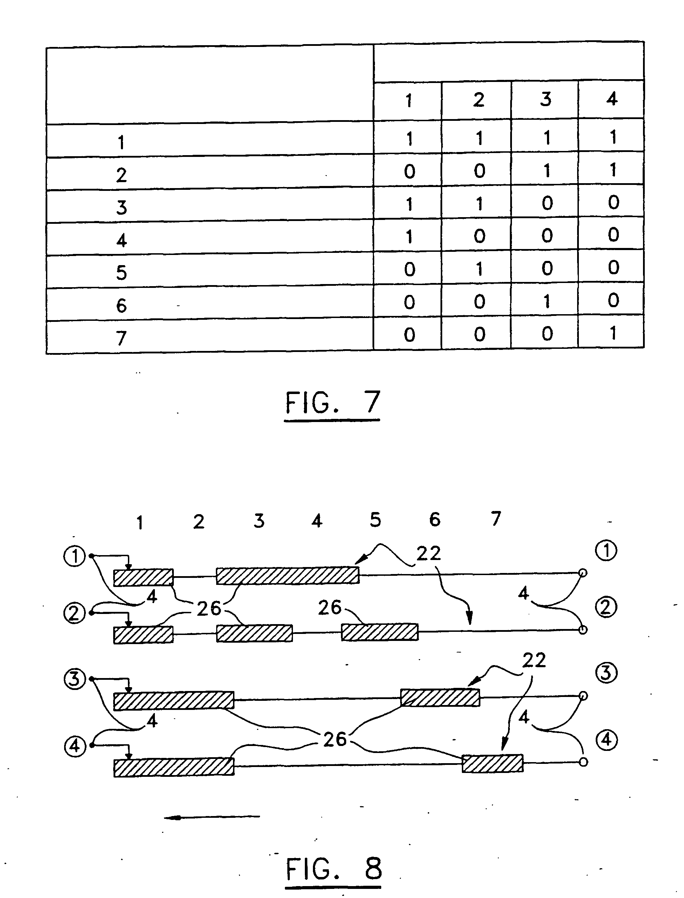

En se référant maintenant à la figure 7, on peut voir un exemple de diagramme logique montrant sept positions possibles d'un dispositif de commutation électromécanique comportant quatre interrupteurs électromécaniques par rapport aux quatre conducteurs d'une ligne de phase, selon la présente invention. Dans le tableau, le chiffre 0 indique que le conducteur est ouvert tandis que le chiffre 1 indique que le conducteur est fermé.

En se référant maintenant à la figure 8, on peut voir une représentation schématique d'un dispositif de commutation électromécanique qui réalise le diagramme logique montré à la figure 7. On peut voir selon l'axe horizontal les différentes positions 1 à 7 que peut occuper le dispositif de commutation. On peut voir également selon les axes verticaux, les quatre conducteurs 4 qui sont numérotés de 1 à 4. Quelle que soit la position des contacts mobiles 22, au moins un des conducteurs de la ligne de phase est toujours en position de faire passer du courant.

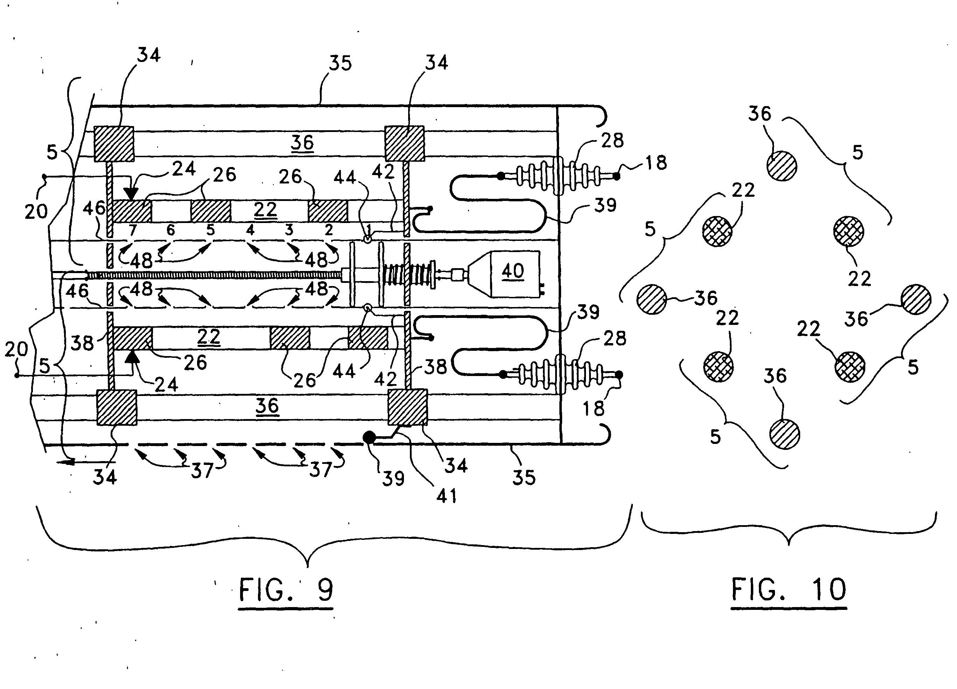

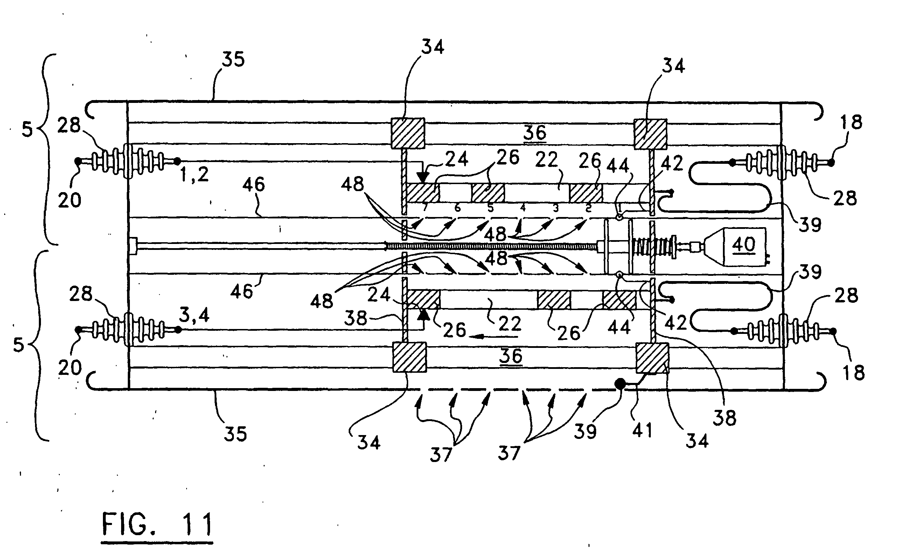

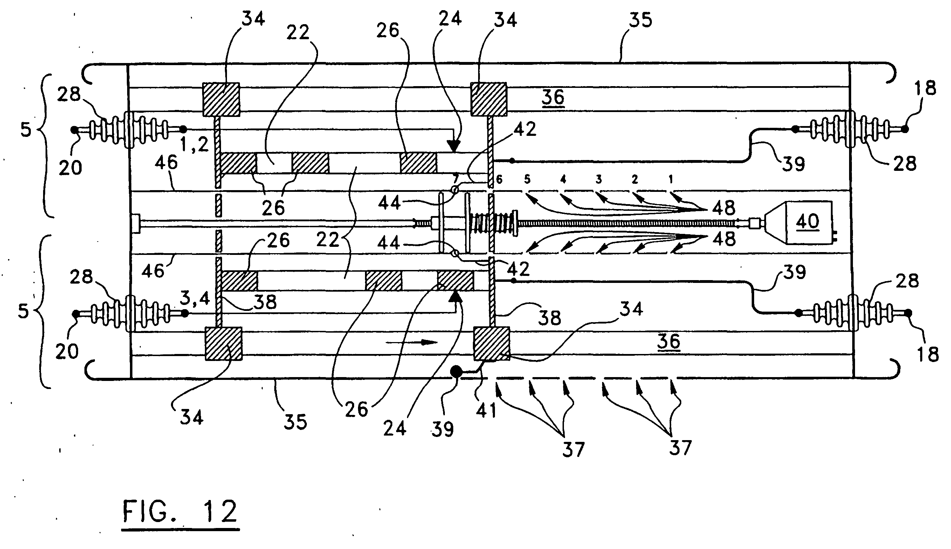

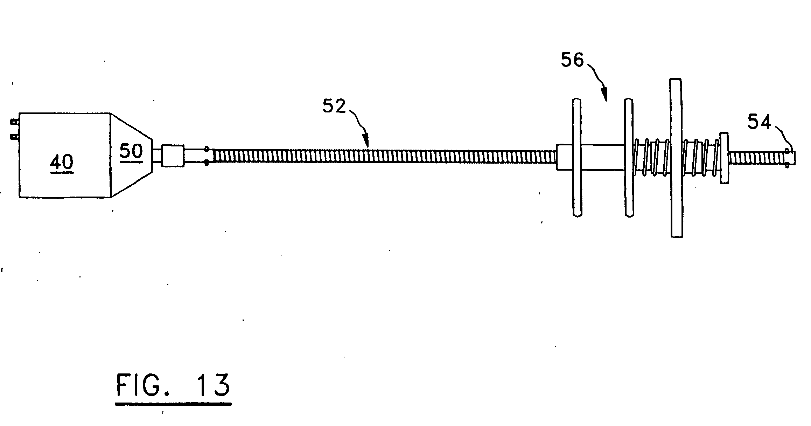

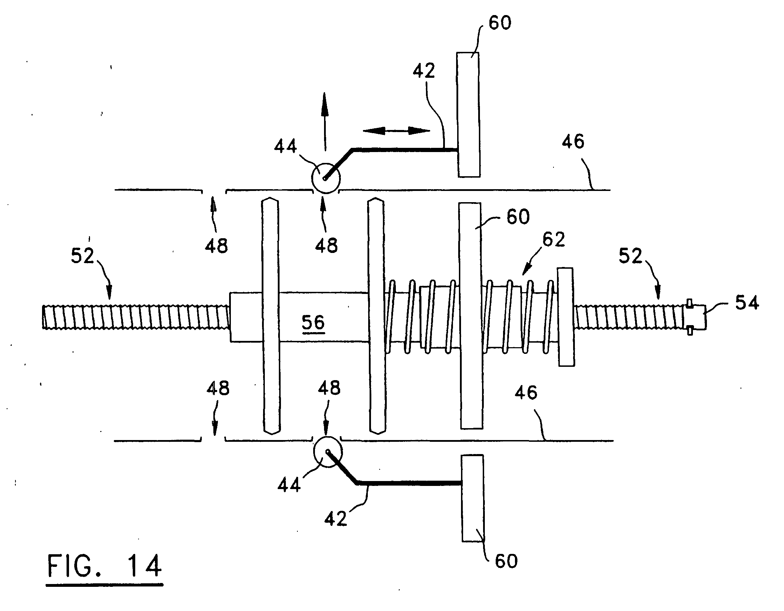

En se référant maintenant aux figures 9 à 14, on peut voir un mode de réalisation préférentiel où les interrupteurs électromécaniques d'une même ligne de phase sont regroupés dans un seul dispositif de commutation électromécanique. La figure 11 montre de façon complète le dispositif montré à la figure 9 dans la position d'opération numéro 1 du diagramme logique montré à la figure 7. La figure 12 montre de façon complète le dispositif de commutation montré aux figures 9 et 11, dans la position d'opération numéro 7 du diagramme logique montré à la figure 7. Ce dispositif de commutation électromécanique comprend un bâti 35, des bornes 20 montées sur le bâti 35 et branchées respectivement à des premières sections des conducteurs de la ligne de phase (non montré), et des contacts conducteurs fixes 24 branchés aux bornes 20.

Le dispositif de commutation électromécanique comprend également des bornes 18 montées sur le bâti 35 et branchées respectivement à des deuxièmes sections des conducteurs de la ligne de phase (non montré). Le dispositif de commutation électromécanique comprend également un chariot mobile apte à se déplacer par rapport au bâti 35 le long d'un parcours. Ce chariot comporte des contacts conducteurs mobiles 22 branchés aux bornes 18. Les contacts conducteurs mobiles 22 ont respectivement des surfaces conductrices partiellement discontinues 26 agencées les unes par rapport aux autres pour que tout au long du parcours, au moins un des conducteurs de la ligne de phase soit fermé par une connexion entre au moins un des contacts conducteurs mobiles 22 et au moins un des contacts conducteurs fixes 24.

Le dispositif de commutation électromécanique comprend également un dispositif de guidage pour guider le chariot le long de son parcours. Ce dispositif de guidage comprend des rails 36 montés sur le bâti 35, et des roulements linéaires 34 montés sur le chariot et aptes à glisser le long des rails 36. Des câbles flexibles 39 connectent les contacts conducteurs mobiles 22 aux bornes 18. Les flèches montrées sur les figures 9, 11 et 12 montrent un sens de déplacement possible du chariot.

Un dispositif moteur est prévu pour déplacer le chariot le long de son parcours. Ce dispositif moteur est contrôlé par le circuit montré à la figure 16. Ce dispositif moteur comprend un moteur 40 monté dans le bâti. Il comprend également un réducteur de vitesse 50 couplé au moteur 40. Une vis mère 52 est prévue. Elle a une de ses extrémités connectée au réducteur de vitesse 50 et son autre extrémité 54 fixée à un point d'ancrage du bâti. Ce dispositif moteur comprend également un berceau 56 apte à se déplacer le long de la vis mère 52. Le berceau 56 est solidaire avec le chariot pour le déplacer lorsque le moteur 40 est actionné.

Un dispositif de régularisation est prévu pour régulariser le mouvement du chariot durant son parcours. Ce dispositif de régularisation comprend une tige flexible à ressort 42 ayant une extrémité connectée au chariot et une autre extrémité munie d'un élément de positionnement 44. Le dispositif de régularisation comprend également un membre allongé 46 monté sur le bâti 35 et muni d'encoches 48 positionnées en relation avec le parcours du chariot et aptes à coopérer avec l'élément de positionnement 44 durant le parcours du chariot de façon à le stabiliser dans différentes positions d'opération.

En opération, lorsque le moteur 40 est actionné, une force tend à déplacer le chariot mais dans un premier temps, l'élément de positionnement 44 résiste à ce déplacement. Puis, après un certain temps lorsque la force est suffisante pour contrecarrer l'effet de la tige flexible à ressort 42, l'élément de positionnement 44 sort de son encoche et va se positionner rapidement dans l'encoche suivante. Ceci permet un déplacement rapide des contacts mobiles 22 en relation avec des positions prédéterminées.

L'appareil comprend en outre un dispositif indicateur pour indiquer la position d'opération actuelle du chariot. Le dispositif indicateur comprend une tige flexible à ressort 41 ayant une de ses extrémités connectée au chariot et son autre extrémité munie d'un élément indicateur 39. Le dispositif indicateur comprend également une partie de paroi externe du bâti 35 qui est munie de trous 37 positionnés en relation avec le parcours du chariot. Ces trous 37 sont aptes à coopérer avec l'élément indicateur 39 durant le parcours du chariot de façon à indiquer à un observateur externe au bâti 35 la position d'opération actuelle du chariot.

L'élément indicateur 39 qui peut être par exemple une bille de couleur rouge est relié aux roulements linéaires 34 par la tige flexible à ressort 41. Lorsque le roulement linéaire bouge, il entraîne avec lui la bille qui bouche alors une des ouvertures 37 pour indiquer à un observateur extérieur au bâti la position des contacts mobiles 22.

En se référant maintenant plus spécifiquement aux figures 9 et 10, on peut voir que le dispositif de commutation électromécanique présente quatre interrupteurs électromécaniques 5. La figure 10 montre une vue en coupe partielle et schématique du dispositif de commutation électromécanique dans laquelle on peut voir la disposition des tiges conductrices 22 par rapport aux rails 36. Un isolant électrique 38 est prévu pour isoler les tiges de commutation les unes par rapport aux autres.

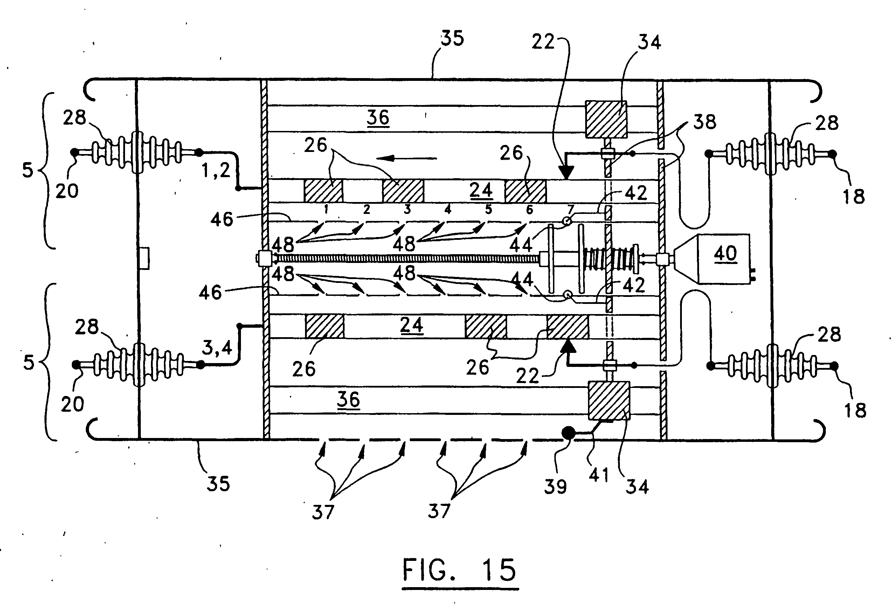

En se référant maintenant à la figure 15, on peut voir selon un autre mode de réalisation préférentiel comment quatre interrupteurs électromécaniques d'une même ligne de phase peuvent être regroupés dans un dispositif de commutation électromécanique. Ce dispositif de commutation électromécanique comprend un bâti 35, des bornes 18 montées sur le bâti 35 et branchées respectivement à des premières sections des conducteurs de la ligne de phase (non montré), et un chariot mobile apte à se déplacer par rapport au bâti 35 le long d'un parcours.

Le chariot comporte des contacts conducteurs mobiles 22 branchés aux bornes 18. Le dispositif de commutation électromécanique comprend également des bornes 20 montées sur le bâti et branchées respectivement à des deuxièmes sections des conducteurs de la ligne de phase (non montré). De plus, le dispositif de commutation électromécanique comporte des contacts conducteurs fixes 24 branchés aux bornes 20. Les contacts conducteurs fixes 24 ont respectivement des surfaces conductrices partiellement discontinues 26 agencées les unes par rapport aux autres pour que tout au long du parcours du chariot au moins un des conducteurs de la ligne de phase soit fermé. Ce dispositif de commutation électromécanique comprend également un dispositif de guidage et un dispositif moteur semblables à ceux montrés aux figures 9 à 14.

Ainsi, comme on peut le voir dans le mode de réalisation montré à la figure 15, les surfaces de contact 26 sont sur les contacts fixes 24 et les contacts mobiles 22 sont réalisés par des curseurs qui sont solidaires des roulements linéaires 34 guidés par les rails 36. Des isolants 38 sont prévus pour isoler les deux contacts mobiles 22, l'un par rapport à l'autre.

En se référant maintenant à la figure 16, on peut voir un mode de réalisation préférentiel d'une unité qui comprend le dispositif de commande et une partie du dispositif de détection. L'unité comprend un processeur 70 ayant un premier port d'entrée 74 pour recevoir des signaux indicatifs des positions d'opération des interrupteurs, des seconds ports d'entrée 76 pour recevoir des signaux indicatifs des tensions aux bornes des paires d'interrupteurs, et des sorties 77 et 79 pour générer des signaux de commande. Le dispositif comprend également un émetteur radiofréquence 66 branché au processeur 70 pour émettre des signaux indicatifs des positions d'opération des interrupteurs, et des tensions aux bornes des paires d'interrupteurs. Un récepteur radiofréquence 64 est également prévu. Le récepteur 64 et l'émetteur 6.6 sont respectivement munis d'antennes 68. Le récepteur 64 est branché au processeur 70 pour recevoir des signaux radiofréquences de commande à partir desquels les signaux de commande sont produits. L'unité comprend également un amplificateur 72 branché au processeur 70 pour commander le moteur 40 en fonction des signaux de commande.

Un dispositif d'alimentation électrique est prévu pour alimenter le processeur 70, le récepteur 64, l'émetteur 66 et l'amplificateur 72. Ce dispositif d'alimentation électrique comprend une première source d'alimentation électrique 78 comportant une batterie 82 et un capteur solaire 80 branché à la batterie 82. Ce dispositif d'alimentation électrique comprend également une seconde source d'alimentation électrique 81 branchée en parallèle à la première source d'alimentation électrique 78, et ayant des entrées 83 branchées aux conducteurs d'une ligne de phase. Ainsi, lorsqu'un des conducteurs est ouvert, l'alimentation peut se faire à partir de ce conducteur au moyen de l'alimentation 81 via une des entrées 83.

Le processeur 70 comprend également un port de communication 75 relié à un compte-tour de la vis mère 52 pour connaître sa position. Le port 74 du processeur 70 sert à recevoir un signal représentatif de la position du chariot du dispositif de commutation électromécanique qui regroupe les interrupteurs électromécaniques pour une même ligne de phase. La position du chariot est représentative de la position de chacun des interrupteurs électromécaniques qui y sont associés.

Le récepteur 64 et l'émetteur 66 permettent respectivement de recevoir et d'émettre des signaux radiofréquences. Les paires d'interrupteurs sont actionnés en fonction des signaux radiofréquences reçus. Les signaux radiofréquences émis par l'émetteur 66 permettent de confirmer la réception des signaux radiofréquences de commande et éventuellement l'exécution des commandes effectuées. Le récepteur 64 est apte en permanence à recevoir les signaux radiofréquences à distance qui sont codés.

Selon une façon préférentielle de procéder, on transmet un premier code contenant une identification d'une paire d'interrupteurs, une fenêtre de temps et ainsi qu'un mot de passe. Ensuite, on transmet un second code contenant une identification de la paire d'interrupteurs à actionner, là commande à effectuer, une information relative au temps à laquelle ladite commande doit être effectuée ainsi que le mot de passe. La commande associée au second code est effectuée seulement si le mot de passe du second code correspondant à celui du premier code, et si le temps d'exécution du second code est- à l'intérieur de la fenêtre de temps définie dans le premier code.

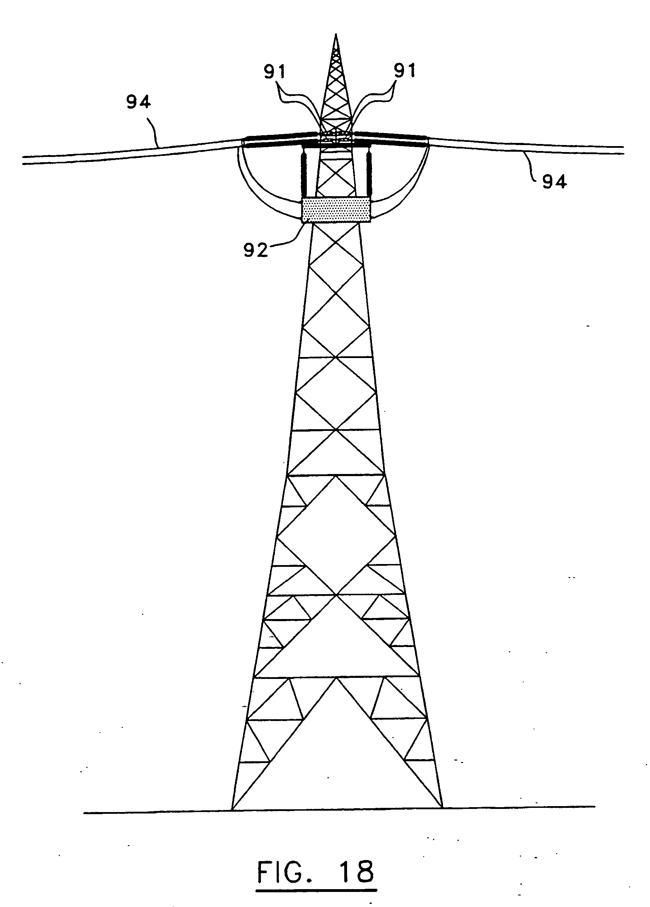

L'émetteur 66 qui fonctionne de façon intermittente ou en continu confirme la commande reçue, le temps d'exécution de la commande, l'état des batteries et la tension dans les conducteurs. L'information relative à la tension aux bornes d'un conducteur ouvert permet en même temps de déterminer le courant qui passe à travers les autres conducteurs qui sont fermés. Un récepteur et un émetteur de zone qui ne sont pas illustrés sont également prévus pour recevoir des données de cellules de charge (montré aux figures 18, 19 et 20) qui sont montées sur les lignes de phase et retransmettre les données reçues des cellules de charge à distance à un poste de commande central (non montré).

Selon un mode d'opération préféré, l'émetteur de la cellule de charge peut être mis en opération de façon intermittente pour transmettre différentes données sur demande ou à période fixe. Par exemple, un émetteur de 5 W pourrait fonctionner durant une milliseconde à toutes les quinze minutes.

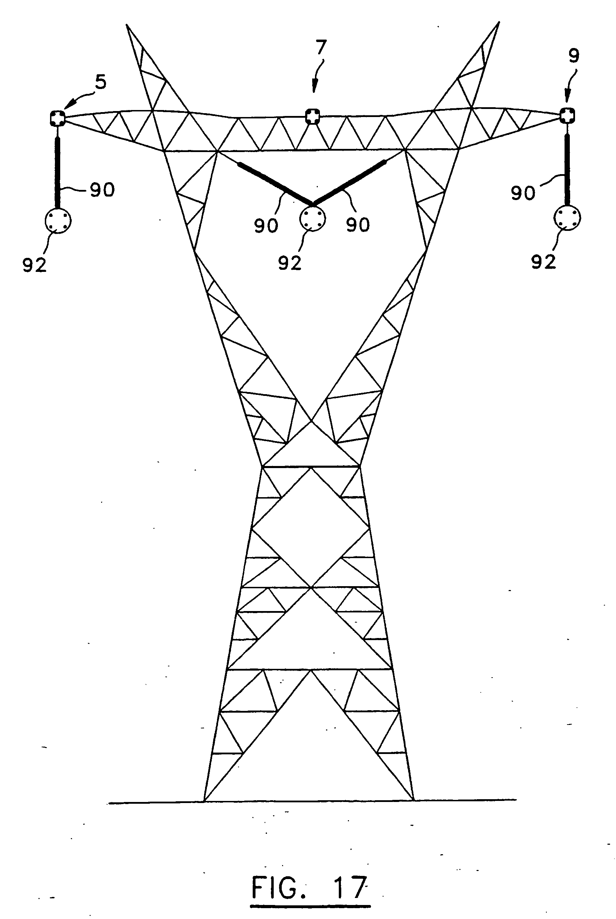

En se référant maintenant à la figure 17, on peut voir une vue de face d'un pylône muni de modules 92 selon la présente invention qui sont supportés par des supports 90. Chaque module 92 comprend l'unité montrée à la figure 16 et un dispositif de commutation électromécanique comme celui montré à la figure 11 ou 15.

En se référant maintenant à la figure 18, on peut voir une vue de côté du pylône montré à la figure 17. Sur cette figure, on peut voir que les modules 92 n'ont pas à supporter la tension mécanique qui est présente dans la ligne de transmission 94. De plus, on peut voir quatre cellules de charge 91 qui sont montées sur les lignes de phase.

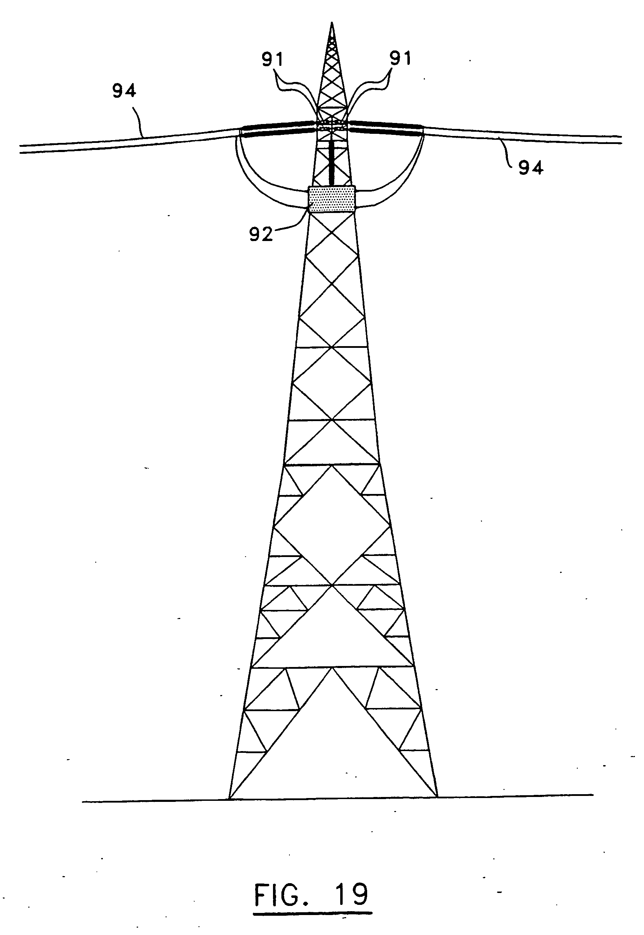

En se référant maintenant à la figure 19, on peut voir une vue de côté d'un pylône électrique où l'on montre une seconde façon de soutenir les modules 92. Également, on peut voir sur cette figure quatre cellules de charge 91 qui sont montées sur les lignes de phase.

En se référant maintenant à la figure 20, on peut voir un schéma bloc d'une cellule de charge. De préférence, une partie du dispositif de détection se trouve dans le circuit montré à la figure 16, et l'autre partie est réalisée par les cellules de charge. Chaque cellule de charge comprend de préférence un processeur 110, une alimentation électrique 116 munie d'au moins une batterie 117, un capteur solaire 118 relié à l'alimentation électrique 116, un émetteur 112 muni d'une antenne 114, un senseur de charge 120, un senseur d'inclinaison 122 et un senseur de température 124.

Le senseur de charge 120 est pour mesurer une valeur de charge supportée par la ligne de phase correspondante. Le senseur d'inclinaison 122 est pour mesurer l'inclinaison de la cellule de charge par rapport à un axe vertical. Le senseur de température 124 est pour mesurer une température ambiante. L'émetteur radiofréquence 112 est pour émettre des signaux indicatifs de la valeur de charge, de l'inclinaison et de la température ambiante.

Le capteur solaire 118 et la batterie 117 alimentent la cellule de charge. Les cellules de charge sont utilisées pour mesurer la charge de verglas. Elles permettent aussi de mesurer les paramètres du galop de la ligne. À partir des cellules de charge, on détermine la mise en service du système de dégivrage ou confirme le succès de l'opération de dégivrage. Plusieurs cellules de charge peuvent être associées à un tronçon de ligne. L'information émise par les différentes cellules de charge est transmise à un poste central (non montré) qui commande les modules 92 montrés aux figures 17, 18 et 19.

En se référant maintenant aux figures 1, 16 et 20, nous décrirons une méthode de commutation selon la présente invention qui comprend les étapes suivantes (a) détecter des conditions d'opération courantes du tronçon de la ligne de transport d'énergie électrique, et (b) commander des paires d'interrupteurs électromécaniques 6 en fonction des conditions d'opération détectées à l'étape (a) pour ouvrir et fermer de façon sélective les conducteurs de chaque ligne de phase de façon à conduire le courant de phase correspondant à travers un ou plusieurs conducteurs. Des signaux de commande sont prévus pour que les interrupteurs de chaque paire puissent être commandés de façon indépendante.

De préférence, on peut faire la commande des paires d'interrupteurs pour que lors d'une fermeture d'une paire d'interrupteurs, on produise des signaux de commande causant une fermeture de l'interrupteur électronique avant une fermeture de l'interrupteur électromécanique, et lors d'une ouverture d'une paire d'interrupteurs, produire des signaux de commande causant une ouverture de l'interrupteur électromécanique avant une ouverture de l'interrupteur électronique. Cette façon de procéder permet de faire la commutation de façon sécuritaire.

L'étape (a) de la méthode selon la présente invention peut comprendre de façon préférentielle les étapes suivantes (i) détecter des positions d'opération des interrupteurs, (ii) mesurer des tensions aux bornes des paires d'interrupteurs, (iii) mesurer pour chaque ligne de phase une valeur de charge qui est supportée au moyen de cellules de charge 91, des inclinaisons des cellules de charge 91 par rapport à un axe vertical, et des températures ambiantes aux cellules de charge 91, (iv) émettre des signaux radiofréquences indicatifs des positions d'opération des interrupteurs, des tensions, des valeurs de charge, des inclinaisons et des températures ambiantes, (v) suite à l'étape (iv), recevoir au moyen du récepteur 64 des signaux radiofréquences de commande, et (vi) produire les signaux de commande en fonction des signaux radiofréquences de commande. Les signaux de commande sont générés aux sorties 77 et 79.

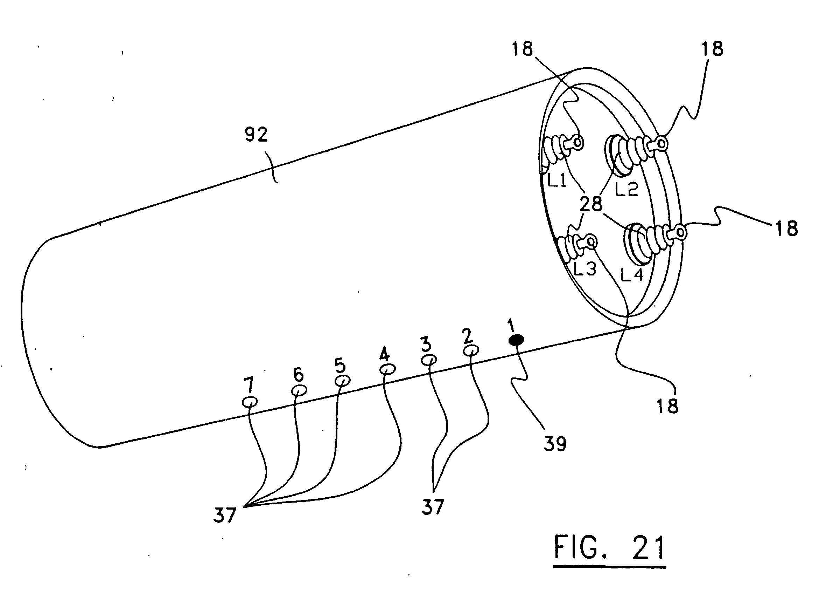

En se référant maintenant à la figure 21, on peut voir une vue en perspective d'un des modules 92 montré aux figures 17, 18 et 19. On peut voir les bornes 18 du dispositif de commutation, ainsi que les isolateurs de traverse 28. On peut voir également les ouvertures 37 ainsi que la bille 39 qui servent à indiquer la position des contacts mobiles à un technicien se trouvant sur les lieux.

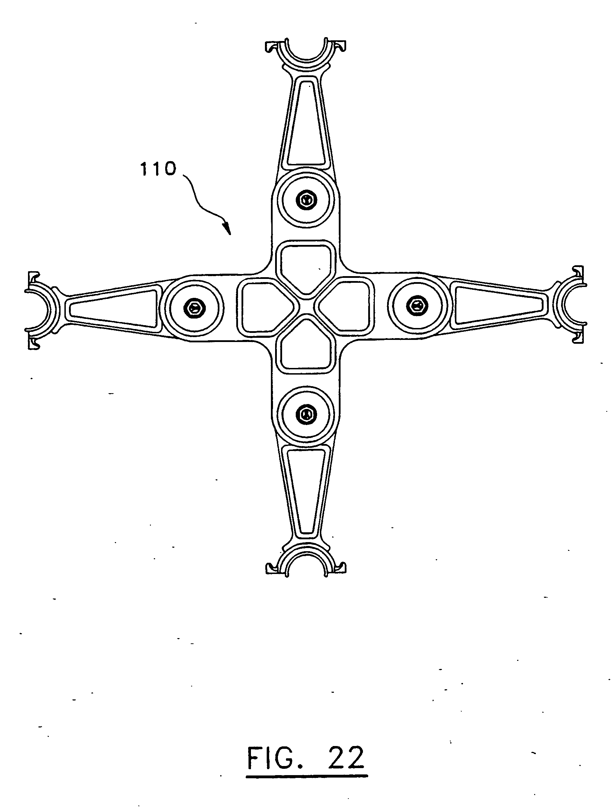

En se référant maintenant à la figure 22, on peut voir une vue de face d'une entretoise standard 110. De par sa construction, cette entretoise isole électriquement les quatre conducteurs les uns par rapport aux autres mais l'isolation en question est insuffisante si l'on veut appliquer la présente invention sur des tronçons de ligne relativement longs.

En se référant à la figure 23, on peut voir une entretoise 112 dont on a augmenté la capacité d'isolation en réalisant, certaines parties 114 avec un matériau isolant comme par exemple un polymère ou de la céramique.

En se référant maintenant à la figure 24, on peut voir une vue de face d'une autre entretoise 116 dont on a augmenté la capacité d'isolation en réalisant une partie 118 avec un matériau isolant comme par exemple un polymère ou de la céramique.

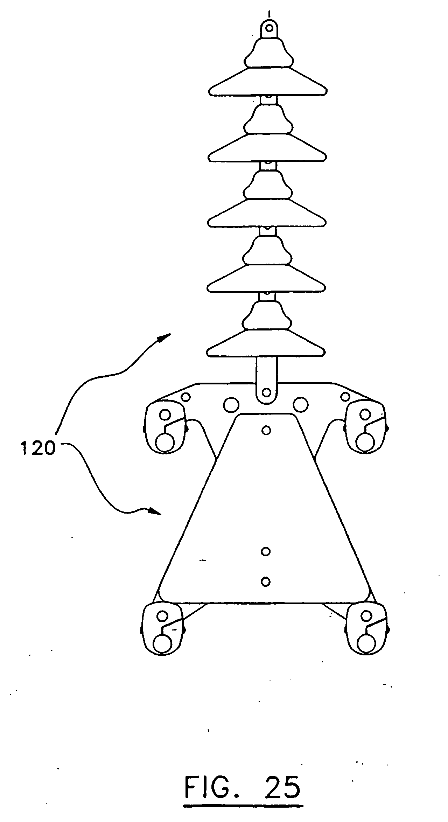

En se référant maintenant à la figure 25, on peut voir une vue de face d'un palonnier standard 120. De par sa construction, ce palonnier qui est monté sur le pylône n'isole pas électriquement les quatre conducteurs les uns par rapport aux autres.

En se référant maintenant à la figure 26, on peut voir une vue de face d'un palonnier 122 dont on a isolé les pinces qui supportent les conducteurs en réalisant certaines parties 124 avec un matériau isolant comme par exemple un polymère ou de la céramique.

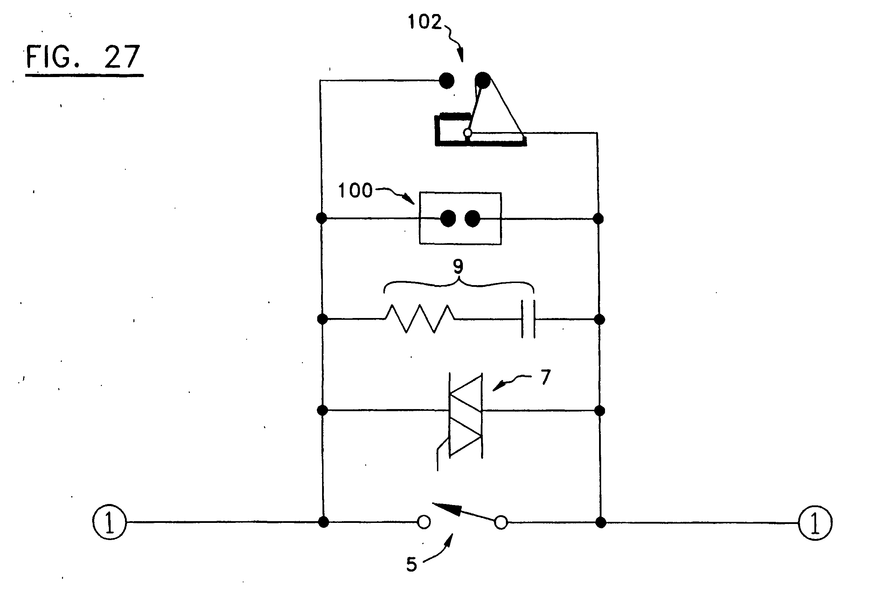

En se référant maintenant à la figure 27, on peut voir un mode de réalisation préférentiel d'une paire d'interrupteurs 6 montrés aux figures 1 à 5. Ce mode de réalisation permet de protéger les interrupteurs électronique et électromécanique 7 et 5. Ainsi, parallèlement aux interrupteurs électronique et électromécanique 7 et 5, on ajoute un éclateur à semi-conducteur tel qu'une diode avalanche ou un varistor 100 pour assurer la conduction en cas de surtension et protéger les interrupteurs. De plus, pour assurer la continuité de la ligne en cas d'un défaut majeur, un éclateur à déclenchement thermique 102 peut être mis en parallèle avec les interrupteurs. Cet éclateur 102 devient court-circuit si suffisamment d'énergie est dissipée pour faire fondre le fil de retenue du mécanisme.à ressort.

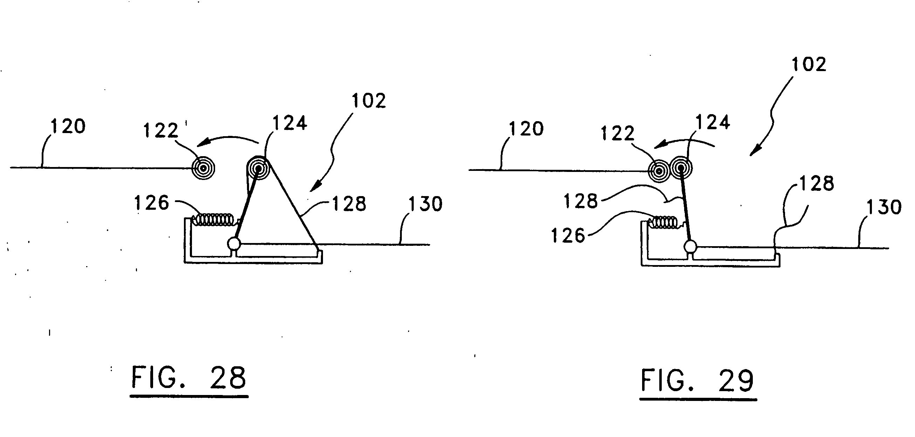

En se référant maintenant aux figures 28 et 29, on peut voir respectivement l'éclateur à déclenchement thermique 102 dans une position armée et dans une position activée. Les flèches montrées dans ces figures indiquent le sens de fermeture des contacts. L'éclateur 102 comprend un contact fixe 122 relié à un conducteur 120 et un contact mobile 124 relié au conducteur 130. Le contact mobile 124 est retenu par un fil fusible 128 et est armé au moyen d'un ressort 126. Lorsque le courant est suffisant, celui-ci fait fondre le fil fusible 128 qui cède, et le ressort 126 pousse le contact mobile 124 vers le contact fixe 122.

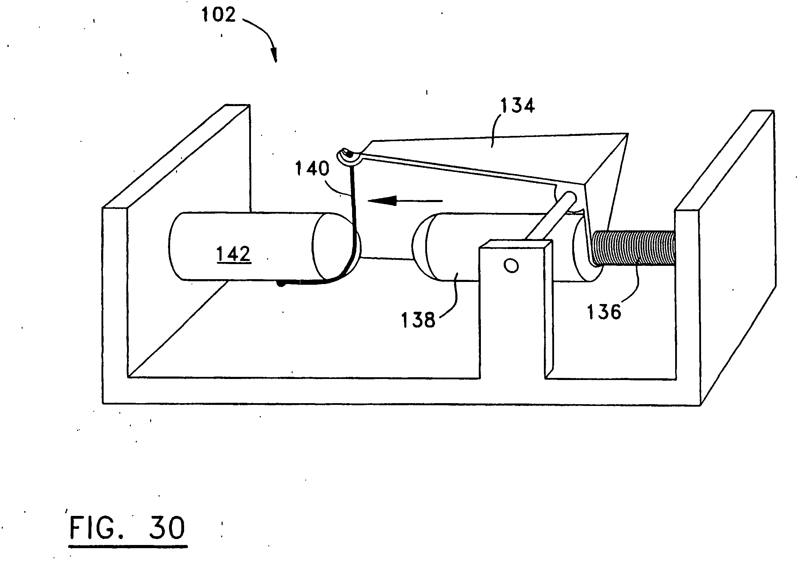

En se référant maintenant à la figure 30, on peut voir un autre mode de réalisation d'un éclateur à déclenchement thermique 102. Cet éclateur 102 comprend un contact fixe 142 et un contact mobile 138 qui est retenu par un fil fusible 140 et une manette de déclenchement 134. Le contact mobile est armé au moyen d'un ressort 136. Lorsque le fil fusible cède, le ressort 136 pousse le contact mobile 138 vers le contact fixe 142.

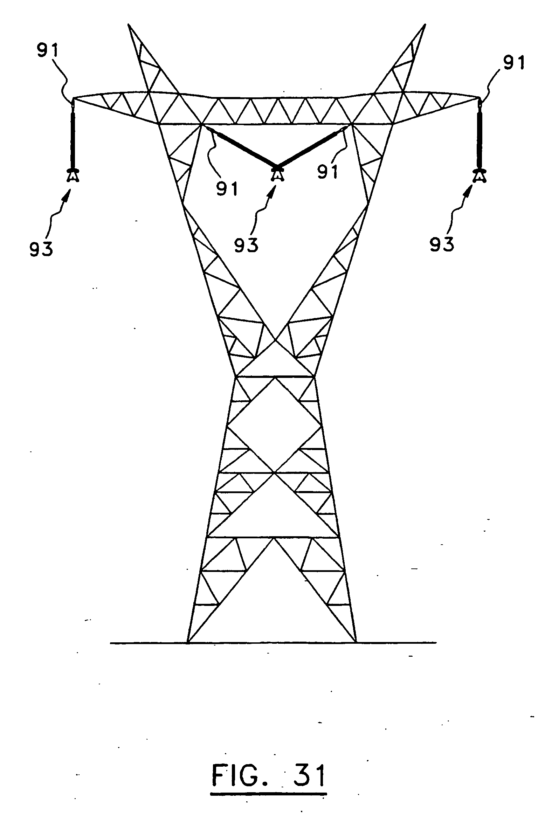

En se référant maintenant à la figure 31, on peut voir un autre mode de réalisation pour monter les cellules de charge 91. Celles-ci sont montées par rapport au palonnier 93.

## Revendications

1. Un appareil de commutation pour un tronçon (3) d'une ligne de transport d'énergie électrique comportant plusieurs lignes de phase (5', 7, 9), chacune des lignes de phase (5', 7, 9) comportant plusieurs conducteurs (4) isolés électriquement les uns des autres et branchés en parallèle pour conduire un courant de phase, les conducteurs (4) de chaque ligne de phase étant court-circuités entre eux à deux extrémités du tronçon, l'appareil étant **caractérisé en ce qu'**il comprend :
- des paires d'interrupteurs électromécanique et électronique (6) branchés en parallèle, pour ouvrir et fermer de façon sélective les conducteurs (4) de chaque ligne de phase de façon à conduire le courant de phase correspondant à travers un ou plusieurs conducteurs (4) ;
- des moyens de détection (110, 120, 122, 124, 70) pour détecter des conditions d'opération courantes du tronçon (3) de la ligne de transport d'énergie électrique ; et
- des moyens de commande (70, 77, 79) pour commander les paires d'interrupteurs électromécanique et électronique (6) en fonction des conditions d'opération courantes du tronçon (3), les interrupteurs de chaque paire (6) étant commandés de façon indépendante par des signaux de commande.

2. Un appareil selon la revendication 1, **caractérisé en ce que** les interrupteurs électromécaniques (5) d'une même ligne de phase sont regroupés dans un dispositif de commutation électromécanique qui comprend :
- un bâti (35) ;
- des premières bornes (20) montées sur le bâti (35) et branchées respectivement à des premières sections des conducteurs de la ligne de phase ;
- des contacts conducteurs fixes (24) branchés aux premières bornes (20);
- des deuxièmes bornes (18) montées sur le bâti et branchées respectivement à des deuxièmes sections des conducteurs de la ligne de phase ;
- un chariot mobile apte à se déplacer par rapport au bâti le long d'un parcours, le chariot incluant des contacts conducteurs mobiles (22) branchés aux deuxièmes bornes (18), les contacts conducteurs mobiles (22) ayant respectivement des surfaces conductrices partiellement discontinues (26) agencées les unes par rapport aux autres pour que tout au long du parcours au moins un des conducteurs de la ligne de phase soit fermé par une connexion entre au moins un des contacts conducteurs mobiles (22) et au moins un des contacts conducteurs fixes (24) ;
- des moyens de guidage (34, 36) pour guider le chariot le long du parcours ; et
- des moyens moteurs (40, 50, 52, 56) pour déplacer le chariot le long du parcours, les moyens moteurs étant commandés par les moyens de commande.

3. Un appareil selon la revendication 1, **caractérisé en ce que** les interrupteurs électromécaniques d'une même ligne de phase sont regroupés dans un dispositif de commutation électromécanique qui comprend :
- un bâti (35);
- des premières bornes (20) montées sur le bâti (35) et branchées respectivement à des premières sections des conducteurs de la ligne de phase ;
- un chariot mobile apte à se déplacer par rapport au bâti le long d'un parcours, le chariot incluant des contacts conducteurs mobiles (22) branchés aux deuxièmes bornes (18),
- des deuxièmes bornes (20) montées sur le bâti (35) et branchées respectivement à des deuxièmes sections des conducteurs de la ligne de phase ;
- des contacts conducteurs fixes (24) branchés aux deuxièmes bornes (20), les contacts conducteurs fixes (24) ayant respectivement des surfaces conductrices partiellement discontinues (26) agencées les unes par rapport aux autres pour que tout au long du parcours du chariot au moins un des conducteurs de la ligne de phase soit fermé par une connexion entre au moins un des contacts conducteurs mobiles (22) et au moins un des contacts conducteurs fixes (24) ;
- des moyens de guidage (34, 36) pour guider le chariot le long du parcours ; et
- des moyens moteurs (40, 50, 52, 56) pour déplacer le chariot le long du parcours, les moyens moteurs (40, 50, 52, 56) étant commandés par les moyens de commande.

4. Un appareil selon la revendication 2, **caractérisé en ce que** les moyens de guidage comprennent des rails (36) montés sur le bâti (35), et des roulements linéaires (34) montés sur le chariot et aptes à glisser le long des rails (36).

5. Un appareil selon la revendication 3, **caractérisé en ce que** les moyens de guidage comprennent des rails (36) montés sur le bâti (35), et des roulements linéaires (34) montés sur le chariot et aptes à glisser le long des rails (36).

6. Un appareil selon la revendication 2, **caractérisé en ce qu'**il comprend en outre des moyens de régularisation pour régulariser un mouvement du chariot durant son parcours, lesdits moyens de régularisation comprenant :
- une tige flexible à ressort (42) ayant une première extrémité connectée au chariot et une seconde extrémité munie d'un élément de positionnement (44) ; et
- un membre allongé (46) monté sur le bâti et muni d'encoches (48) positionnées en relation avec le parcours du chariot et aptes à coopérer avec l'élément de positionnement (44) durant le parcours du chariot de façon à stabiliser ledit chariot dans différentes positions d'opération.

7. Un appareil selon la revendication 3, **caractérisé en ce qu'**il comprend en outre des moyens de régularisation pour régulariser un mouvement du chariot durant son parcours, lesdits moyens de régularisation comprenant :
- une tige flexible à ressort (42) ayant une première extrémité connectée au chariot et une seconde extrémité munie d'un élément de positionnement (44) ; et
- un membre allongé (46) monté sur le bâti et muni d'encoches (48) positionnées en relation avec le parcours du chariot et aptes à coopérer avec l'élément de positionnement (44) durant le parcours du chariot de façon à stabiliser ledit chariot dans différentes positions d'opération.

8. Un appareil selon la revendication 2, **caractérisé en ce qu'**il comprend en outre des moyens indicateurs pour indiquer une position d'opération actuelle du chariot, lesdits moyens indicateurs comprenant :
- une tige flexible à ressort (41) ayant une première extrémité connectée au chariot et une seconde extrémité munie d'un élément indicateur (39); et
- une partie de paroi externe du bâti, munie de trous (37) positionnés en relation avec le parcours du chariot et aptes à coopérer avec l'élément indicateur (39) durant le parcours du chariot de façon à indiquer à un observateur externe au bâti la position d'opération actuelle du chariot.

9. Un appareil selon la revendication 3, **caractérisé en ce qu'**il comprend en outre des moyens indicateurs pour indiquer une position d'opération actuelle du chariot, lesdits moyens indicateurs comprenant :
- une tige flexible à ressort (41) ayant une première extrémité connectée au chariot et une seconde extrémité munie d'un élément indicateur (39) ; et
- une partie de paroi externe du bâti, munie de trous (37) positionnés en relation avec le parcours du chariot et aptes à coopérer avec l'élément indicateur (39) durant le parcours du chariot de façon à indiquer à un observateur externe au bâti la position d'opération actuelle du chariot.

10. Un appareil selon la revendication 2, **caractérisé en ce que** les moyens moteurs comprennent :
- un moteur (40) monté dans le bâti (35) et commandé par les moyens de commande ;
- un réducteur de vitesse (50) couplé au moteur (40) ;
- une vis mère (52) ayant une première extrémité connectée au réducteur de vitesse (50), et une seconde extrémité fixée à un point d'ancrage du bâti ; et
- un berceau (56) apte à se déplacer le long de la vis mère (52), le berceau (56) étant solidaire avec le chariot pour déplacer ledit chariot lorsque le moteur (40) est actionné.

11. Un appareil selon la revendication 3, **caractérisé en ce que** les moyens moteurs comprennent :
- un moteur (40) monté dans le bâti (35) et commandé par les moyens de commande ;
- un réducteur de vitesse (50) couplé au moteur (40) ;
- une vis mère (52) ayant une première extrémité connectée au réducteur de vitesse (50), et une seconde extrémité fixée à un point d'ancrage du bâti ; et
- un berceau (56) apte à se déplacer le long de la vis mère (52), le berceau (56) étant solidaire du chariot pour déplacer ledit chariot lorsque le moteur (40) est actionné.

12. Un appareil selon la revendication 1, **caractérisé en ce que** :
- les moyens de détection comprennent :
• plusieurs cellules de charge (91), au moins une cellule de charge étant montée par ligne de phase, chaque cellule de charge comprenant un senseur de charge (120) pour mesurer une valeur de charge supportée par la ligne de phase correspondante, un senseur d'inclinaison (122) pour mesurer son inclinaison par rapport à un axe vertical, un senseur de température (124) pour mesurer une température ambiante, et un émetteur radiofréquence (112) pour émettre des signaux indicatifs de la valeur de charge, de l'inclinaison et de la température ambiante ; et
• une unité de contrôle comportant :
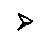 un processeur (70) ayant des premiers ports d'entrée (74) pour recevoir des signaux indicatifs des positions d'opération des interrupteurs, et des seconds ports d'entrée (76) pour recevoir des signaux indicatifs des tensions aux bornes des paires d'interrupteurs ;
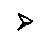 un émetteur radiofréquence (66) branché au processeur (70) pour émettre des signaux indicatifs des positions d'opération des interrupteurs, et des tensions ; et
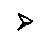 des moyens d'alimentation électrique (78, 81) pour alimenter le processeur, et l'émetteur ;
- les moyens de commande comprennent :
• le processeur (70) qui comporte en outre des sorties pour émettre les signaux de commande ;
• un récepteur radiofréquence (64) branché au processeur (70) pour recevoir des signaux radiofréquences de commande à partir desquels les signaux de commande sont produits ;
• un amplificateur (72) branché au processeur (70) pour commander les moyens moteurs (40, 52) en fonction des signaux de commande ; et
• les moyens d'alimentation électrique (78, 81) pour alimenter en outre le récepteur (64) et l'amplificateur (72).

13. Un appareil selon la revendication 12, **caractérisé en ce que** les moyens d'alimentation électrique comprennent :
- une première source d'alimentation électrique (78) comportant une batterie (82) et un capteur solaire (80) branchée à la batterie (82) ; et
- une seconde source d'alimentation électrique (81) branchée en parallèle à la première source d'alimentation électrique (78), et ayant des entrées (83) branchées aux conducteurs.

14. Un appareil selon la revendication 1, **caractérisé en ce qu'**il comprend respectivement, en parallèle avec chaque paire d'interrupteurs, un circuit amortisseur (9), un éclateur à semi-conducteur (100) et un éclateur thermique (102).

15. Une méthode de commutation pour un tronçon (13) d'une ligne de transport d'énergie électrique comportant plusieurs lignes de phase (5',7, 9), chacune des lignes de phase (5', 7, 9) comportant plusieurs conducteurs (4) isolés électriquement les uns des autres et branchés en parallèle pour conduire un courant de phase, les conducteurs (4) de chaque ligne de phase étant court-circuités entre eux à deux extrémités du tronçon, la méthode étant **caractérisée en ce qu'**elle comprend les étapes suivantes :
a) détecter des conditions d'opération courantes du tronçon de la ligne de transport d'énergie électrique ; et
b) commander des paires d'interrupteurs électromécanique et électronique (6) branchés en parallèle en fonction des conditions d'opération détectées à l'étape (a) pour ouvrir et fermer de façon sélective les conducteurs (4) de chaque ligne de phase de façon à conduire le courant de phase correspondant à travers un ou plusieurs conducteurs (4), les interrupteurs de chaque paire (6) étant commandés de façon indépendante par des signaux de commande.

16. Une méthode selon la revendication 15, **caractérisée en ce que** l'étape (b) comprend les étapes suivantes :
(i) lors d'une fermeture d'une paire d'interrupteurs (6), produire des signaux de commande causant une fermeture de l'interrupteur électronique (7) avant une fermeture de l'interrupteur électromécanique (5) ; et
(ii) lors d'une ouverture d'une paire d'interrupteurs (6), produire des signaux de commande causant une ouverture de l'interrupteur électromécanique (5) avant une ouverture de l'interrupteur électronique (7).

17. Une méthode selon la revendication 15, **caractérisée en ce que** l'étape (a) comprend les étapes suivantes :
(i) détecter des positions d'opération des interrupteurs;
(ii) mesurer des tensions aux bornes des paires d'interrupteurs (6) ;
(iii) mesurer pour chaque ligne de phase une valeur de charge qui est supportée au moyen de cellules de charge (91), des inclinaisons des cellules de charge (91) par rapport à un axe vertical, et des températures ambiantes aux cellules de charge (91) ;
(iv)émettre des signaux radiofréquences indicatifs des positions d'opération des interrupteurs, des tensions, des valeurs de charge, des inclinaisons et des températures ambiantes ;
(v) suite à l'étape (iv), recevoir des signaux radiofréquences de commande ; et
(vi) produire les signaux de commande en fonction des signaux radiofréquences de commande.

18. Une méthode selon la revendication 15, **caractérisée en ce que**, dans l'étape (b), les paires d'interrupteurs électromécanique et électronique (6) sont commandées de façon à conduire le courant de phase de chaque ligne de phase à travers au moins un des interrupteurs électromécaniques (5) correspondants.

19. Une méthode selon la revendication 18, **caractérisée en ce que** l'étape (b) comprend les étapes suivantes :
(i) ouvrir de façon permanente des interrupteurs électromécaniques (5) de paires d'interrupteurs (6) prédéterminées associées à des lignes de phase prédéterminées ; et
(ii) utiliser les interrupteurs électroniques (7) des paires d'interrupteurs (6) prédéterminées pour ouvrir et fermer les conducteurs correspondants.

## Patentansprüche

1. Kommutierungsvorrichtung für ein Teilstück (3) einer Transportleitung für elektrische Energie, die mehrere Phasenleitungen (5', 7, 9) aufweist, wovon jede mehrere Leiter (4) umfasst, die elektrisch voneinander isoliert und parallelgeschaltet sind, um einen Phasenstrom zu leiten, wobei die Leiter (4) jeder Phasenleitung an zwei Enden des Teilstücks miteinander kurzgeschlossen sind, wobei die Vorrichtung **dadurch gekennzeichnet ist, dass** sie umfasst:
- Paare elektromechanischer und elektronischer Unterbrecher (6), die parallelgeschaltet sind, um die Leiter (4) jeder Phasenleitung wahlweise zu öffnen und zu schließen, derart, dass der entsprechende Phasenstrom durch einen oder mehrere Leiter (4) geleitet wird;
- Erfassungsmittel (110, 120, 122, 124, 70), zum Erfassen der momentanen Betriebsbedingungen des Teilstücks (3) der Transportleitung für elektrische Energie; und
- Steuermittel (70, 77, 79), zum Steuern der Paare elektromechanischer und elektronischer Unterbrecher (6) in Abhängigkeit von den momentanen Betriebsbedingungen des Teilstücks (3), wobei die Unterbrecher jedes Paars (6) durch die Steuersignale unabhängig voneinander gesteuert werden.

2. Vorrichtung nach Anspruch 1, **dadurch gekennzeichnet, dass** die elektromechanischen Unterbrecher (5) derselben Phasenleitung in einer elektromechanischen Kommutierungsvorrichtung gruppiert sind, die umfasst:
- einen Rahmen (35);
- erste Anschlüsse (20), die am Rahmen (35) angebracht sind und jeweils an erste Abschnitte der Leiter der Phasenleitung angeschaltet sind;
- feste Leiterkontakte (24), die an die ersten Anschlüsse (20) angeschaltet sind;
- zweite Anschlüsse (18), die am Rahmen angebracht sind und jeweils an zweite Abschnitte der Leiter der Phasenleitung angeschaltet sind;
- einen beweglichen Schlitten, der sich in Bezug auf den Rahmen längs einer Wegstrecke verlagern kann, wobei der Schlitten bewegliche Leiterkontakte (22) aufweist, die an die zweiten Anschlüsse (18) angeschaltet sind, wobei die beweglichen Leiterkontakte (22) jeweils teilweise unterbrochene leitende Oberflächen (26) besitzen, die relativ zueinander so angeordnet sind, dass auf der gesamten Wegstrecke wenigstens einer der Leiter der Phasenleitung durch eine Verbindung zwischen wenigstens einem der beweglichen Leiterkontakte (22) und wenigstens einem der festen Leiterkontakte (24) geschlossen ist;
- Führungsmittel (34, 36), zum Führen des Schlittens längs der Wegstrecke; und
- Motormittel (40, 50, 52, 56), zum Verlagern des Schlittens längs der Wegstrecke, wobei die Motormittel durch die Steuermittel gesteuert werden.

3. Vorrichtung nach Anspruch 1, **dadurch gekennzeichnet, dass** die elektromechanischen Unterbrecher derselben Phasenleitung in einer elektromechanischen Kommutierungsvorrichtung gruppiert sind, die umfasst:
- einen Rahmen (35);
- erste Anschlüsse (20), die am Rahmen (35) angebracht und jeweils an erste Abschnitte der Leiter der Phasenleitung angeschaltet sind;
- einen beweglichen Schlitten, der sich in Bezug auf den Rahmen längs einer Wegstrecke verlagern kann, wobei der Schlitten bewegliche Leiterkontakte (22) enthält, die an zweite Anschlüsse (18) angeschaltet sind,
- zweite Anschlüsse (20), die an dem Rahmen (35) angebracht und jeweils an zweite Abschnitte der Leiter der Phasenleitung angeschaltet sind;
- feste Leiterkontakte (24), die an die zweiten Anschlüsse (20) angeschaltet sind, wobei die festen Leiterkontakte (24) jeweils teilweise unterbrochene leitende Oberflächen (26) besitzen, die relativ zueinander so angeordnet sind, dass auf der ganzen Länge der Wegstrecke des Schlittens wenigstens einer der Leiter der Phasenleitung durch eine Verbindung zwischen wenigstens einem der beweglichen Leiterkontakte (22) und wenigstens einem der festen Leiterkontakte (24) geschlossen ist;
- Führungsmittel (34, 36), zum Führen des Schlittens längs der Wegstrecke; und
- Motormittel (40, 50, 52, 56), zum Verlagern des Schlittens längs der Wegstrecke, wobei die Motormittel (40, 50, 52, 56) durch die Steuermittel gesteuert werden.

4. Vorrichtung nach Anspruch 2, **dadurch gekennzeichnet, dass** die Führungsmittel Schienen (36), die am Rahmen (35) angebracht sind, und geradlinige Wälzlager (34), die am Schlitten angebracht sind und längs der Schienen (36) gleiten können, umfassen.

5. Vorrichtung nach Anspruch 3, **dadurch gekennzeichnet, daß** die Führungsmittel Schienen (36), die am Rahmen (35) angebracht sind, und geradlinige Wälzlager (34), die am Schlitten angebracht sind und längs der Schienen (36) gleiten können, umfassen.

6. Vorrichtung nach Anspruch 2, **dadurch gekennzeichnet, dass** sie außerdem Regulierungsmittel umfasst, um eine Bewegung des Schlittens während seiner Fahrt zu regulieren, wobei die Regulierungsmittel umfassen:
- einen flexiblen Federstift (42), der ein mit dem Schlitten verbundenes erstes Ende und ein mit einem Positionierungselement (44) versehenes zweites Ende besitzt; und
- ein lang gestrecktes Element (46), das am Rahmen angebracht und mit Nuten (48) versehen ist, die in Bezug auf die Wegstrecke des Schlittens positioniert sind und mit dem Positionierungselement (44) während der Fahrt des Schlittens in der Weise zusammenwirken können, dass sie den Schlitten in verschiedenen Betriebspositionen stabilisieren.

7. Vorrichtung nach Anspruch 3, **dadurch gekennzeichnet, dass** sie außerdem Regulierungsmittel umfasst, um eine Bewegung des Schlittens während seiner Fahrt zu regulieren, wobei die Regulierungsmittel umfassen:
- einen flexiblen Federstift (42), der ein mit dem Schlitten verbundenes erstes Ende und ein mit einem Positionierungselement (44) versehenes zweites Ende besitzt; und
- ein lang gestrecktes Element (46), das am Rahmen angebracht und mit Nuten (48) versehen ist, die in Bezug auf die Wegstrecke des Schlittens positioniert sind und mit dem Positionierungselement (44) während der Fahrt des Schlittens in der Weise zusammenwirken können, dass der Schlitten in verschiedenen Arbeitspositionen stabilisiert wird.

8. Vorrichtung nach Anspruch 2, **dadurch gekennzeichnet, dass** sie außerdem Anzeigemittel umfasst, um eine momentane Arbeitsposition des Schlittens anzuzeigen, wobei die Anzeigemittel umfassen:
- einen flexiblen Federstift (41), der ein mit dem Schlitten verbundenes erstes Ende und ein mit einem Anzeigeelement (39) versehenes zweites Ende besitzt; und
- einen Teil der Außenwand des Rahmens, der mit Löchern (37) versehen ist, die in Bezug auf die Wegstrecke des Schlittens positioniert sind und mit dem Anzeigeelement (39) während der Fahrt des Schlittens in der Weise zusammenwirken können, dass sie einem außerhalb des Rahmens befindlichen Beobachter die momentane Betriebsposition des Schlittens anzeigen.

9. Vorrichtung nach Anspruch 3, **dadurch gekennzeichnet, dass** sie außerdem Anzeigemittel umfasst, um eine momentane Betriebsposition des Schlittens anzuzeigen, wobei die Anzeigemittel umfassen:
- einen flexiblen Federstift (41), der ein mit dem Schlitten verbundenes erstes Ende und ein mit einem Anzeigeelement (39) versehenes zweites Ende besitzt; und
- einen Teil der Außenwand des Rahmens, der mit Löchern (37) versehen ist, die in Bezug auf die Wegstrecke des Schlittens positioniert sind und mit dem Anzeigeelement (39) während der Fahrt des Schlittens in der Weise zusammenwirken können, dass sie einem außerhalb des Rahmens befindlichen Beobachter die momentane Betriebsposition des Schlittens anzeigen.

10. Vorrichtung nach Anspruch 2, **dadurch gekennzeichnet, dass** die Motormittel umfassen:
- einen Motor (40), der im Rahmen (35) angebracht ist und durch die Steuermittel gesteuert wird;
- ein mit dem Motor (40) gekoppeltes Untersetzungsgetriebe (50);
- eine Leiterspindel (52), die ein mit dem Untersetzungsgetriebe (50) verbundenes erstes Ende und ein an einem Verankerungspunkt des Rahmens befestigtes zweites Ende besitzt; und
- ein Gestell (56), das sich längs der Leiterspindel (52) verlagern kann und mit dem Schlitten fest verbunden ist, um den Schlitten zu verlagern, wenn der Motor (40) betätigt wird.

11. Vorrichtung nach Anspruch 3, **dadurch gekennzeichnet, dass** die Motormittel umfassen:
- einen Motor (40), der im Rahmen (35) angebracht ist und durch die Steuermittel gesteuert wird;
- ein mit dem Motor (40) gekoppeltes Untersetzungsgetriebe (50);
- eine Leiterspindel (52), die ein mit dem Untersetzungsgetriebe (50) verbundenes erstes Ende und ein an einem Verankerungspunkt des Rahmens befestigtes zweites Ende besitzt; und
- ein Gestell (56), das sich längs der Leiterspindel (52) verlagern kann und mit dem Schlitten fest verbunden ist, um den Schlitten zu verlagern, wenn der Motor (40) betätigt wird.

12. Vorrichtung nach Anspruch 1, **dadurch gekennzeichnet, dass**:
- die Erfassungsmittel umfassen:
* mehrere Ladungszellen (91), wobei wenigstens eine Ladungszelle pro Phasenleitung angebracht ist, wobei jede Ladungszelle einen Ladungssensor (120) umfasst, um einen Ladungswert zu messen, der durch die entsprechende Phasenleitung unterstützt wird, einen Neigungssensor (122) umfasst, um ihre Neigung in Bezug auf eine vertikale Achse zu messen, einen Temperatursensor (124) umfasst, um eine Umgebungstemperatur zu messen, und einen Hochfrequenzsender (112) umfasst, um Signale auszusenden, die den Ladungswert, die Neigung und die Umgebungstemperatur angeben; und
* eine Steuereinheit, die umfasst:
> einen Prozessor (70), der erste Eingangs-Ports (74) besitzt, um die Signale zu empfangen, die die Betriebspositionen der Unterbrecher angeben, und zweite Eingangs-Ports (76) besitzt, um die Signale zu empfangen, die die Spannungen an den Anschlüssen der Unterbrecherpaare angeben;
> einen Hochfrequenzsender (66), der an den Prozessor (70) angeschaltet ist, um Signale auszusenden, die die Betriebspositionen der Unterbrecher sowie die Spannungen angeben; und
> elektrische Versorgungsmittel (78, 81), die den Prozessor und den Sender versorgen;
- die Steuermittel umfassen:
* den Prozessor (70), der außerdem Ausgänge aufweist, um die Steuersignale auszusenden;
* einen Hochfrequenzempfänger (64), der an den Prozessor (70) angeschaltet ist, um die Hochfrequenz-Steuersignale zu empfangen, anhand derer die Steuersignale erzeugt werden;
* einen Verstärker (72), der an den Prozessor (70) angeschaltet ist, um die Motormittel (40, 52) in Abhängigkeit von den Steuersignalen zu steuern; und
* die elektrischen Versorgungsmittel (78, 81), um außerdem den Empfänger (64) und den Verstärker (72) zu versorgen.

13. Vorrichtung nach Anspruch 12, **dadurch gekennzeichnet, dass** die elektrischen Versorgungsmittel umfassen:
- eine erste elektrische Versorgungsquelle (78), die eine Batterie (82) und einen an die Batterie (82) angeschalteten Solarsensor (80) umfasst; und
- eine zweite elektrische Versorgungsquelle (81), die zu der ersten elektrischen Versorgungsquelle (78) parallelgeschaltet ist und an die Leiter angeschaltete Eingänge (83) besitzt.

14. Vorrichtung nach Anspruch 1, **dadurch gekennzeichnet, dass** sie jeweils parallel zu jedem Unterbrecherpaar eine Dämpfungsschaltung (9), eine Halbleiter-Funkenstrecke (100) und eine thermische Funkenstrecke (102) umfasst.

15. Kommutierungsverfahren für ein Teilstück (13) einer Transportleitung für elektrische Energie, die mehrere Phasenleitungen (5', 7, 9) umfasst, wovon jede mehrere Leiter (4) aufweist, die voneinander elektrisch isoliert und parallelgeschaltet sind, um einen Phasenstrom zu leiten, wobei die Leiter (4) jeder Phasenleitung an zwei Enden des Teilstücks miteinander kurzgeschlossen sind, wobei das Verfahren **dadurch gekennzeichnet ist, dass** es die folgenden Schritte umfasst:
a) Erfassen der momentanen Betriebsbedingungen des Teilstücks der Transportleitung für elektrische Energie; und
b) Steuern von elektromechanischen und elektronischen Unterbrecherpaaren (6), die in Abhängigkeit von den im Schritt (a) erfassten Betriebsbedingungen parallelgeschaltet werden, um die Leiter (4) jeder Phasenleitung wahlweise zu öffnen und zu schließen, derart, dass der entsprechende Phasenstrom durch einen oder mehrere Leiter (4) geleitet wird, wobei die Unterbrecher jedes Paars (6) in voneinander unabhängiger Weise durch die Steuersignale gesteuert werden.

16. Verfahren nach Anspruch 15, **dadurch gekennzeichnet, dass** der Schritt (b) die folgenden Schritte umfasst:
(i) wenn ein Unterbrecherpaar (6) geschlossen ist, Erzeugen von Steuersignalen, die ein Schließen des elektronischen Unterbrechers (7) vor einem Schließen des elektromechanischen Unterbrechers (5) bewirken; und
(ii) wenn ein Unterbrecherpaar (6) geöffnet wird, Erzeugen von Steuersignalen, die ein Öffnen des elektromechanischen Unterbrechers (5) vor einem Öffnen des elektronischen Unterbrechers (7) bewirken.

17. Verfahren nach Anspruch 15, **dadurch gekennzeichnet, dass** der Schritt (a) die folgenden Schritte umfasst:
(i) Erfassen der Betriebspositionen der Unterbrecher;
(ii) Messen der Spannungen an den Anschlüssen der Unterbrecherpaare (6);
(iii) für jede Phasenleitung Messen eines Ladungswertes, der von Ladungszellen (91) unterstützt wird, der Neigungen der Ladungszellen (91) in Bezug auf eine vertikale Achse und der Umgebungstemperaturen der Ladungszellen (91);
(iv) Aussenden von Hochfrequenzsignalen, die die Betriebspositionen der Unterbrecher, die Spannungen, die Ladungswerte, die Neigungen und die Umgebungstemperaturen angeben;
(v) nach dem Schritt (iv) Empfangen von Hochfrequenz-Steuersignalen; und
(vi) Erzeugen von Steuersignalen in Abhängigkeit der Hochfrequenz-Steuersignale.

18. Verfahren nach Anspruch 15, **dadurch gekennzeichnet, dass** im Schritt (b) die elektromechanischen und elektronischen Unterbrecherpaare (6) in der Weise gesteuert werden, dass sie den Phasenstrom jeder Phasenleitung durch wenigstens einen der entsprechenden elektromechanischen Unterbrecher (5) eiten.

19. Verfahren nach Anspruch 18, **dadurch gekennzeichnet, dass** der Schritt (b) die folgenden Schritte umfasst:
(i) permanentes Öffnen der elektromechanischen Unterbrecher (5) vorgegebener Unterbrecherpaare (6), die vorgegebenen Phasenleitungen zugeordnet sind; und
(ii) Verwenden der elektronischen Unterbrecher (7) der vorgegebenen Unterbrecherpaare (6), um die entsprechenden Leiter zu öffnen und zu schließen.

## Claims

1. A switching apparatus for a segment (3) of an electric power line having several phase lines (5', 7, 9), each of the phase lines (5', 7, 9) having several conductors (4) electrically insulated one from the other and connected in parallel for conducting a phase current, the conductors (4) of each phase line being short-circuited among them at two ends of the segment, the apparatus being **characterized in that** it comprises:
- pairs of electromechanical and electronic switches (6) connected in parallel, for selectively opening and closing the conductors (4) of each phase line so as to conduct the corresponding phase current through one or several conductors (4);
- detecting means (110, 120, 122, 129, 70) for detecting current operating conditions of the segment (3) of the electric power line; and
- control, means (70, 77, 79) for controlling the pairs of electromechanical and electronic switches (6) according to the current operating conditions of the segment (3), the switches of each pair (6) being independently controlled by control signals.

2. An apparatus according to claim 1, **characterized in that** the electromechanical switches (5) of a same phase line are integrated in an electromechanical switching device which comprises:
- a housing (35);
- first terminals (20) mounted on the housing (35) and connected respectively to first sections of the conductors of the phase line;
- fixed conducting contacts (24) connected to the first terminals (20);
- second terminals (18) mounted on the housing and connected respectively to second sections of the conductors of the phase line;
- a mobile carriage capable of displacement with respect to the housing along a course, the carriage including mobile conducting contacts (22) connected to the second terminals (18), the mobile conducting contacts (22) having respectively partially discontinuous conducting surfaces (26) disposed one with respect to the others so that all along the course at least one of the conductors of the phase line is closed by a connection between at least one of the mobile conducting contacts (22) and at least one of the fixed conducting contacts (24);
- guiding means (34, 36) for guiding the carriage along its course; and
- motor means (40, 50, 52, 56) for moving the carriage along its course, the motor means being controlled by the control means.

3. An apparatus according to claim 1, **characterized in that** the electromechanical switches of a same phase line are integrated in an electromechanical switching device which comprises:
- a housing (35);
- first terminals (20) mounted on the housing (35) and connected respectively to first sections of the conductors of the phase line;
- second terminals (18) mounted on the housing (35) and connected respectively to second sections of the conductors of the phase line;
- a mobile carriage capable of displacement with respect to the housing along a course, the carriage including mobile conducting contacts (22) connected to the second terminals (18),
- fixed conducting contacts (24) connected to the second terminals (18), the fixed conducting contacts (24) having respectively partially discontinuous conducting surfaces (26) disposed one with respect to the others so that all along the course at least one of the conductors of the phase line is closed by a connection between at least one of the mobile conducting contacts (22) and at least one of the fixed conducting contacts (24);
- guiding means (34, 36) for guiding the carriage along its course; and
- motor means (40, 50, 52, 56) for moving the carriage along its course, the motor means (40, 50, 52, 56) being controlled by the control means.

4. An apparatus according to claim 2, **characterized in that** the guiding means comprise rails (36) mounted on the housing (35), and linear bearings (34) mounted on the carriage and capable of sliding along the rails (36).

5. An apparatus according to claim 3, **characterized in that** the guiding means comprise rails (36) mounted on the housing (35), and linear bearings (34) mounted on the carriage and capable of sliding along the rails (36).

6. An apparatus according to claim 2, **characterized in that** it further comprises regulating means for regulating a movement of the carriage during its course, said regulating means comprising:
- a flexible spring rod (42) having a first extremity connected to the carriage and a second extremity provided with a positioning component (44); and
- an elongated member (46) mounted on the housing and provided with notches (48) positioned in relation to the course of the carriage and capable of cooperating with the positioning component (44) during the course of the carriage so as to stabilize said carriage in different operating positions.

7. An apparatus according to claim 3, **characterized in that** it further comprises regulating means for regulating a movement of the carriage during its course, said regulating means comprising:
- a flexible spring rod (42) having a first extremity connected to the carriage and a second extremity provided with a positioning component (44); and
- an elongated member (46) mounted on the housing and provided with notches (48) positioned in relation to the course of the carriage and capable of cooperating with the positioning component (44) during the course of the carriage so as to stabilize said carriage in different operating positions.

8. An apparatus according to claim 2, **characterized in that** it further comprises indicating means for indicating an actual operating position of the carriage; said indicating means comprising:
- a flexible spring rod (41) having a first extremity connected to the carriage and a second extremity provided with an indicating component (39); and
- a part of an external wall of the housing, provided with holes (37) positioned in relation to the course of the carriage and capable of cooperating with the indicating component (39) during the course of the carriage so as to indicate to an observer external to the housing the actual operating position of the carriage.

9. An apparatus according to claim 3, **characterized in that** it further comprises indicating means for indicating an actual operating position of the carriage, said indicating means comprising:
- a flexible spring rod (41) having a first extremity connected to the carriage and a second extremity provided with an indicating component (39); and
- a part of an external wall of the housing, provided with holes (37) positioned in relation to the course of the carriage and capable of cooperating with the indicating component (39) during the course of the carriage so as to indicate to an observer external to the housing the actual operating position of the carriage.

10. An apparatus according to claim 2, **characterized in that** the motor means comprise:
- a motor (40) mounted on the housing (35) and controlled by control means;
- a speed reducer (50) coupled to the motor (40);
- a lead screw (52) having a first extremity connected to the speed reducer (50), and a second extremity fixed to an anchorage point of the housing; and
- a barrel (56) capable of moving along the lead screw (52), the barrel (56) being linked to the carriage for moving said carriage when the motor (40) is activated.

11. An apparatus according to claim 3, **characterized in that** the motor means comprise:
- a motor (40) mounted on the housing (35) and controlled by control means;
- a speed reducer (50) coupled to the motor (40);
- a lead screw (52) having a first extremity connected to the speed reducer (50), and a second extremity fixed to an anchorage point of the housing; and
- a barrel (56) capable of moving along the lead screw (52), the barrel (56) being linked to the carriage for moving said carriage when the motor (40) is activated.

12. An apparatus according to claim 1, **characterized in that**:
- the detecting means comprise:
• several load cells (91), at least one load cell being mounted for every phase line, each load cell comprising a load sensor (120) for measuring a load value supported by the corresponding phase line, an inclination sensor (122) for measuring its inclination with respect to a vertical axis, a temperature sensor (124) for measuring an ambient temperature, and a radiofrequency transmitter (112) for transmitting signals indicating the value of the load, the inclination and the ambient temperature; and
• a control unit comprising:
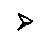 a processor (70) having first input ports (74) for receiving signals indicating the operating positions of the switches, and second input ports (76) for receiving signals indicating the voltages at the terminals of the pairs of switches;
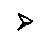 a radiofrequency transmitter (66) connected to the processor (70) for transmitting signals indicating the operating positions of the switches, and of the voltages; and
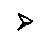 electric power supply means (78, 81) for supplying the processor, and the transmitter;
- the control means comprise:
• the processor (70) which has furthermore outputs for transmitting the control signals;
• a radiofrequency receiver (64) connected to the processor (70) for receiving radiofrequency control signals from which the control signals are produced;
• an amplifier (72) connected to the processor (70) for controlling the motor means (40, 52) according to the control signals; and
• the electric power supply means (78, 81) for supplying furthermore the receiver (64) and the amplifier (72).

13. An apparatus according to claim 12, **characterized in that** the electric power supply means comprise:
- a first electric power supply (78) having a battery (82) and a solar panel (80) connected to the battery (82); and
- a second electric power supply (81) connected in parallel to the first electric power supply (78), and having inputs (83) connected to the conductors.

14. An apparatus according to claim 1, **characterized in that** it comprises respectively, in parallel with each pair of switches, a damping circuit (9), a voltage clamp (100) and a thermal spark gap device (102).

15. A switching method for a segment (3) of an electric power line having several phase lines (5', 7, 9), each of the phase lines (5', 7, 9) having several conductors (4) electrically insulated one from the other and connected in parallel for conducting a phase current, the conductors (4) of each phase line being short-circuited among them at two ends of the segment, the method being **characterized in that** it comprises the following steps:
(a) detecting current operating conditions of the segment of the electric power line; and
(b) controlling pairs of electromechanical and electronic switches (6) connected in parallel according to the operating conditions detected in step (a) for selectively opening and closing the conductors (4) of each phase line so as to conduct the corresponding phase current through one or several conductors (4), the switches of each pair (6) being independently controlled by control signals.

16. A method according to claim 15, **characterized in that** step (b) comprises the following steps:
(i) during a closing of a pair of switches (6), producing control signals causing a closing of the electronic switch (7) before a closing of the electromechanical switch (5); and
(ii) during an opening of a pair of switches (6), producing control signals causing an opening of the electromechanical switch (5) before an opening of the electronic switch (7).

17. A method according to claim 15, **characterized in that** step (a) comprises the following steps:
(i) detecting operating positions of the switches;
(ii) measuring voltages at the terminals of the pairs of switches (6);
(iii) measuring for each phase line a load value that is supported by means of load cells (91), inclinations of the load cells (91) with respect to a vertical axis, and temperatures ambient to the load cells (91);
(iv) transmitting radiofrequency signals indicating the operating positions of the switches, the voltages, the load values, the inclinations and the ambient temperatures;
(v) following step (iv), receiving radiofrequency control signals; and
(vi) producing the control signals according to the radiofrequency control signals.

18. A method according to claim 15, **characterized in that**, in step (b), the pairs of electromechanical and electronic switches (6) are controlled so as to conduct the phase current of each phase line through at least one of the corresponding electromechanical switches (5).

19. A method according to claim 18, **characterized in that** step (b) comprises the following steps:
(i) permanently opening electromechanical switches (5) of predetermined pairs of switches (6) associated to predetermined phase lines; and
(ii) using the electronic switches (7) of the predetermined pairs of switches (6) to open and close the corresponding conductors.
